# EUROPEAN PATENT APPLICATION

(11) **EP 2 945 056 A1**
(43) Date of publication of application: **18.11.2015**
(21) Application number: 15151539.2
(22) Date of filing: 16.01.2015
(51) Int. Cl.: G06F 9/44, G06F 3/048

(54) **Method and apparatus for controlling user interface**

(30) Priority: 17.01.2014 US 201461928656 P; 21.02.2014 KR 20140020842
(71) Applicant: Samsung Electronics Co., Ltd, Gyeonggi-do 443-742 (KR)
(72) Inventor: Seo, Jangseok, 443-742 Gyeonggi-do (KR); Jung, Hyungwon, 443-742 Gyeonggi-do (KR); Park, Taegun, 443-742 Gyeonggi-do (KR)
(74) Representative: Nederlandsch Octrooibureau

(57) **Abstract**

A wearable electronic device is provided. The wearable electronic device includes a wireless communication module to establish a communication connection with an external electronic device, and a user interface control module. The user interface control module is configured to receive, via the wireless communication module and from the external electronic device, content corresponding to an application to be executed at the external electronic device and information corresponding to one or more user interfaces to be presented at the wearable electronic device, and to present at least one portion of the content using at least one user interface of the one or more user interfaces corresponding to the information. Other various embodiments are possible.

## Description

### TECHNICAL FIELD

The present disclosure relates to a method and an apparatus for controlling a user interface. More particularly, the present disclosure relates to a method and an apparatus for providing/displaying contents or functions through a user interface.

### BACKGROUND

Electronic devices have been developed into various types of wearable devices such as electronic necklaces, electronic accessories, electronic tattoos, electronic glasses, head-mounted-devices (HMD), and electronic contact lenses, while providing various applications related to the electronic devices and functions thereof.

The wearable devices may have hardware having fewer capabilities as compared to the hardware of non-wearable electronic devices (e.g., smart phones or tablet PCs). For example, the wearable devices may include a lower performance processor or a lower capacity memory in comparison with a smart phone having a higher performance processor and a higher capacity memory.

The above information is presented as background information only to assist with an understanding of the present disclosure. No determination has been made, and no assertion is made, as to whether any of the above might be applicable as prior art with regard to the present disclosure.

### BRIEF DESCRIPTION OF THE DRAWINGS

The above and other aspects, features, and advantages of certain embodiments of the present disclosure will be more apparent from the following description in conjunction with the accompanying drawings, in which:
FIG. 1 illustrates a network environment including an electronic device according to an embodiment of the present disclosure;
FIGS. 2A and 2B are block diagrams of electronic devices according to various embodiments of the present disclosure;
FIG. 3 illustrates communication protocols among a plurality of electronic devices according to an embodiment of the present disclosure;
FIG. 4 illustrates a network environment including electronic devices according to an embodiment of the present disclosure;
FIGS. 5A and 5B illustrate a network environment including electronic devices according to various embodiments of the present disclosure;
FIGS. 6A and 6B illustrate examples in which electronic devices provides contents through external electronic devices according to various embodiments of the present disclosure;
FIG. 7 is a flowchart in which an electronic device provides contents through an external electronic device according to an embodiment of the present disclosure;
FIG. 8A is a flowchart in which an electronic device provides contents through an external electronic device according to an embodiment of the present disclosure;
FIG. 8B is a flowchart in which an electronic device provides a function of an application by interworking with an external electronic device according to an embodiment of the present disclosure;
FIG. 9A is a flowchart in which an electronic device provides contents according to an embodiment of the present disclosure;
FIG. 9B is a flowchart in which an electronic device receives contents from an external electronic device according to an embodiment of the present disclosure;
FIG. 10 is a flowchart in which an electronic device provides contents via an external electronic device according to an embodiment of the present disclosure;
FIG. 11 illustrates an example of a user interface by which an electronic device provides contents according to an embodiment of the present disclosure;
FIG. 12 illustrates an example in which an electronic device provides contents according to an embodiment of the present disclosure; and
FIG. 13 is a block diagram of an electronic device according to an embodiment of the present disclosure.

Throughout the drawings, it should be noted that like reference numbers are used to depict the same or similar elements, features, and structures.

### DETAILED DESCRIPTION

The following description with reference the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms "include" and "may include" refer to the existence of a corresponding disclosed function, operation or component which can be used in various embodiments of the present disclosure and does not limit one or more additional functions, operations, or components. In the present disclosure, the terms "include" and "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

The term "or" used in various embodiments of the present disclosure includes any or all of combinations of listed words. For example, the expression "A or B" may include A, may include B, or may include both A and B.

The expressions "1", "2", "first", and "second" used in various embodiments of the present disclosure may modify various components of various embodiments but do not limit the corresponding components. For example, the above expressions do not limit the sequence and/or importance of the corresponding elements. The expressions may be used to distinguish a component element from another component element. For example, a first user device and a second user device indicate different user devices although both of them are user devices. For example, without departing from the scope of the present disclosure, a first component element may be named a second component element. Similarly, the second component element also may be named the first component element.

It should be noted that if it is described that one component element is "coupled" or "connected" to another component element, the first component element may be directly coupled or connected to the second component, and a third component element may be "coupled" or "connected" between the first and second component elements. Conversely, when one component element is "directly coupled" or "directly connected" to another component element, it may be construed that a third component element does not exist between the first component element and the second component element.

The terms in various embodiments of the present disclosure are used to describe a specific embodiment, and are not intended to limit the present disclosure. As used herein, the singular forms are intended to include the plural forms as well, unless the context clearly indicates otherwise.

Unless defined differently, all terms used herein, which include technical terminologies or scientific terminologies, have the same meaning as a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present disclosure.

An electronic device according to various embodiments of the present disclosure may be a device with a communication function. For example, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), an MP3 player, a mobile medical device, a camera, and a wearable device (e.g., a head-mounted-device (HMD) such as electronic glasses, electronic clothes, an electronic bracelet, an electronic necklace, an electronic appcessory, an electronic tattoo, or a smart watch).

According to some embodiments, an electronic device may be a smart home appliance with a communication function. The smart home appliance as an example of the electronic device may include at least one of, for example, a television, a Digital Video Disk (DVD) player, an audio system, a refrigerator, an air conditioner, a vacuum cleaner, an oven, a microwave oven, a washing machine, an air cleaner, a set-top box, a TV box (e.g., Samsung HomeSync™, Apple TV™, or Google TV™), a game console, an electronic dictionary, an electronic key, a camcorder, and an electronic picture frame.

According to some embodiments, the electronic device may include at least one of various medical appliances (e.g., magnetic resonance angiography (MRA), magnetic resonance imaging (MRI), computed tomography (CT), and ultrasonic machines), navigation equipment, a global navigation satellite system (GNSS) receiver, an event data recorder (EDR), a flight data recorder (FDR), an automotive infotainment device, electronic equipment for ships (e.g., ship navigation equipment and a gyrocompass), avionics, security equipment, a vehicle head unit, an industrial or home robot, an automatic teller machine (ATM) of a banking system, and a point of sales (POS) of a business.

According to some embodiments, the electronic device may include at least one of furniture or a part of a building/structure having a communication function, an electronic board, an electronic signature receiving device, a projector, or measuring equipment (e.g., equipment for measuring a water supply, electricity, gases or radio waves). An electronic device according to various embodiments of the present disclosure may be a combination of one or more of above described various devices. Also, an electronic device according to various embodiments of the present disclosure may be a flexible device. Also, an electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device that uses an electronic device (e.g., an artificial intelligence electronic device).

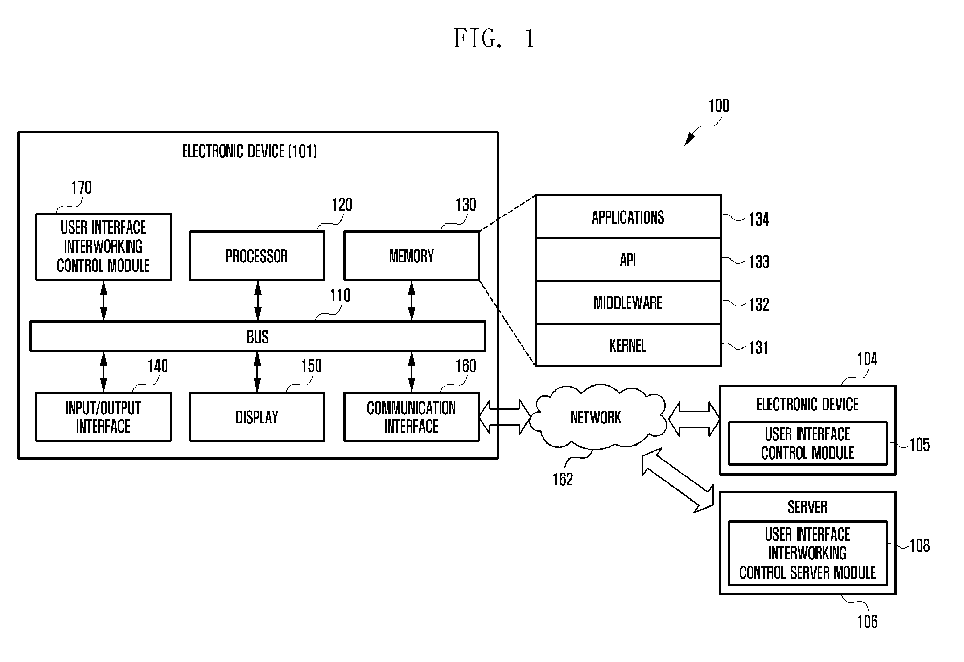

FIGS. 1 through 13, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 illustrates a network environment including an electronic device according to an embodiment of the present disclosure.

Referring to FIG. 1, a network environment 100 and an electronic device 101 are illustrated, where the electronic device 101 may include a bus 110, a processor 120, a memory 130, an input/output interface 140, a display 150, a communication interface 160, and a user interface interworking control module 170.

The bus 110 may be a circuit connecting the aforementioned elements and transmitting information (e.g., a control message) between the aforementioned elements.

For example, the processor 120 may receive instructions from the aforementioned other elements (e.g., the memory 130, the input/output interface 140, the display 150, the communication interface 160, and the user interface interworking control module 170) through the bus 110, decipher the received instructions, and perform calculation or data processing according to the deciphered instructions.

The memory 130 may store instructions or data received from or created by the processor 120 or the other elements (e.g., the input/output interface 140, the display 150, the communication interface 160, and the user interface interworking control module 170). The memory 130 may include programming modules, for example, a kernel 131, middleware 132, an Application Programming Interface (API) 133, and applications 134. Each of the programming modules described above may be formed of software, firmware, and hardware, or a combination thereof.

The kernel 131 may control or manage system resources (e.g., the bus 110, the processor 120, and/or the memory 130) used for executing an operation or function implemented in the remaining other programming modules, for example, the middleware 132, the API 133, or the applications 134. Also, the kernel 131 may provide an interface capable of accessing and controlling or managing the individual elements of the electronic device 101 by using the middleware 132, the API 133, and/or the applications 134.

The middleware 132 may perform a relay function of allowing the API 133 and/or the applications 134 to communication with the kernel 131, so as to exchange data. Further, in regard to task requests received from the applications 134, the middleware 132 may perform a control (e.g., scheduling and/or load balancing) for the task requests using, for example, a method of assigning a priority by which the system resources (e.g., the bus 110, the processor 120, and the memory 130) of the electronic device 101 may be used for at least one of the applications 134.

The API 133 is an interface through which the applications 134 may control functions provided by the kernel 131 and the middleware 132, and may include at least one interface or function (e.g., an instruction) for file control, window control, image processing, or text control.

According to various embodiments, the applications 134 may include a Short Message Service (SMS)/Multimedia Message Service (MMS) application, an e-mail application, a calendar application, an alarm application, a health care application (e.g., an application for measuring an amount of exercise or blood sugar), and an environmental information application (e.g., an application for providing atmospheric pressure, humidity, temperature, and the like). Additionally or alternately, the applications 134 may include an application related to an information exchange between the electronic device 101 and an external electronic device (e.g., an electronic device 104). The application related to the information exchange may include, for example, a notification relay application for transmitting specific information to the external electronic device, or a device management application for managing the external electronic device.

For example, the notification relay application may include a function of transferring, to the external electronic device (e.g., the electronic device 104), notification information generated from other applications of the electronic device 101 (e.g., an SMS/MMS application, an e-mail application, a health management application, an environmental information application, and the like). Additionally or alternatively, the notification relay application may receive the notification information from, for example, the external electronic device (e.g., the electronic device 104), and may provide/display the received notification information to a user. The device management application may manage (e.g., install, delete, and/or update), for example, a function for at least a part of the external electronic device (e.g., the electronic device 104) communicating with the electronic device 101 (e.g., turning on/off the external electronic device itself (or some elements thereof) or adjusting brightness (or resolution) of a display), applications operating in the external electronic device, or services provided from the external electronic device (e.g., a telephone call service or a message service).

According to various embodiments, the applications 134 may include an application set based on an attribute (e.g., type of electronic device) of the external electronic device. For example, in a case where the external electronic device is an MP3 player, the applications 134 may include an application related to the reproduction of music. Similarly, in a case where the external electronic device is a mobile medical appliance, the applications 134 may include an application related to health care. According to an embodiment, the applications 134 may include at least one of an application designated to the electronic device 101 and an application received from the external electronic device (e.g., a server 106 and/or the electronic device 104) via a network 162.

The input/output interface 140 may transfer instructions or data input from a user through an input/output device (e.g., a sensor, a keyboard, and/or a touch screen) to the processor 120, the memory 130, the communication interface 160, or the user interface interworking control module 170 through, for example, the bus 110. For example, the input/output interface 140 may provide the processor 120 with data for a user's touch input through the touch screen. Further, through the input/output device (e.g., a speaker and/or a display), the input/output interface 140 may output instructions or data received from the processor 120, the memory 130, the communication interface 160, and/or the user interface interworking control module 170 through, for example, the bus 110. For example, the input/output interface 140 may output voice data processed through the processor 120 to a user through a speaker.

The display 150 may display various pieces of information (e.g., multimedia data and/or text data) to a user.

The communication interface 160 may connect communication between the electronic device 101 and the external electronic device (e.g., the electronic device 104 and/or the server 106). For example, the communication interface 160 may be connected to the network 162 through wireless or wired communication to communicate with the external device. The wireless communication may include at least one of, for example, Wi-Fi, Bluetooth (BT), Near Field Communication (NFC), Global Navigation Satellite System (GNSS) and cellular communication (e.g., Long Term Evolution (LTE), LTE-Advanced, Code Division Multiple Access (CDMA), Wideband CDMA (WCDMA), Universal Mobile Telecommunication System (UMTS), Wireless Broadband (WiBro), Global System for Mobile communication (GSM), and the like). The wired communication may include at least one of, for example, a Universal Serial Bus (USB), a High Definition Multimedia Interface (HDMI), Recommended Standard 232 (RS-232), and a Plain Old Telephone Service (POTS). For example, the GNSS may comprise Global Positioning System (GPS), Glonass, Beidou Navigation Satellite System, or Galileo. The "GNSS" may be interchangeably used with a term, such as "GPS".

According to an embodiment, the network 162 may be a telecommunication network. The communication network may include at least one of a computer network, the Internet, the Internet of things, and a telephone network. According to an embodiment, a protocol (e.g., a transport layer protocol, data interworking layer protocol, or a physical layer protocol) for communication between the electronic device 101 and the external device may be supported by at least one of the applications 134, the application programming interface 133, the middleware 132, the kernel 131, and the communication interface 160.

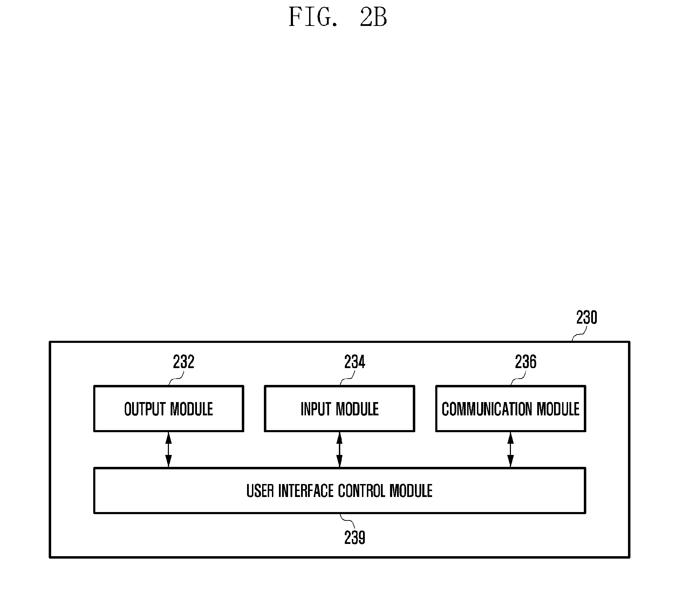

According to an embodiment, the electronic device 104 may include a user interface control module 105 for interworking with the user interface interworking control module 170 of the electronic device 101. For example, the user interface control module 105 may receive content corresponding to the applications 134 of the electronic device 101 and information corresponding to a user interface (e.g., a visual interface and/or an audio interface) for providing the content from the electronic device 101, and provide/display at least some of the content by using at least one user interface corresponding to the information. Additional information corresponding to the user interface control module 105 is provided through FIG. 2B described below.

According to an embodiment, the server 106 may support driving of the electronic device 101 by conducting at least one of the operations (or functions) implemented by the electronic device 101. For example, the server 106 may include a user interface interworking control server module 108 capable of supporting the user interface interworking control module 170 implemented in the electronic device 101. For example, the user interface interworking control server module may include at least one component of the user interface interworking control module 170, and may perform (e.g., perform as a proxy) at least one of the operations performed by the user interface interworking control module 170.

The user interface interworking control module 170 may process at least some pieces of information acquired from other elements (e.g., the processor 120, the memory 130, the input/output interface 140, and/or the communication interface 160), and may provide the processed information to a user through various methods. For example, the user interface interworking control module 170 may control at least some of the functions of the electronic device 101 by using the processor 120 or independently from the processor 120 such that the electronic device 101 interworks with another electronic device (e.g., the electronic device 104 and/or the server 106). For example, the user interface interworking control module 170 may obtain a request for content corresponding to at least one application among a plurality of applications 134 of the electronic device 101 and transmit the content and information corresponding to a user interface for providing/displaying the content to the electronic device 104 in response to the request. According to an embodiment, at least a part of the user interface interworking control module 170 may include at least a part of the application programming interface 133.

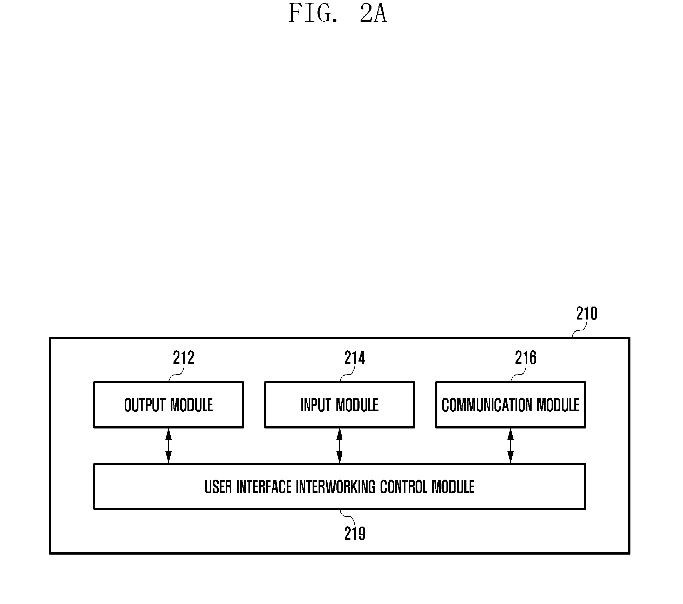

According to an embodiment, at least one component of the user interface interworking control module 170 may be included in the server 106 (e.g., the user interface interworking control server module 108) and receive at least one operation, which is performed by the user interface interworking control module 170, from the server 106. Additional information corresponding to the user interface interworking control module 170 is provided through FIG. 2A described below.

FIG. 2A is a block diagram of an electronic device according to an embodiment of the present disclosure.

Referring to FIG. 2A, an electronic device 210 is illustrated, where the electronic device 210 may include an output module 212, an input module 214, a communication module 216, and a user interface interworking control module 219. According to an embodiment, the output module 212, the input module 214, the communication module 216, and the user interface interworking control module 219 may be configured by software (e.g., a programming module) or hardware (e.g., an integrated circuit), or a combination thereof. Further, although the output module 212, the input module 214, the communication module 216, and the user interface interworking control module 219 are illustrated as separate blocks in FIG. 2A, at least some (e.g., two or more) of the output module 212, the input module 214, the communication module 216, and the user interface interworking control module 219 may be configured by one module (e.g., a software module and/or a hardware module) in one embodiment.

The output module 212 may output information to the user. According to an embodiment, the output module 212 may be the input/output interface 140. For example, the output module 212 may output information via an operatively coupled display (e.g., the display 150). According to an embodiment, the output module 212 may display content related to applications (e.g., the applications 134) of the electronic device 210.

The input module 214 may acquire inputs for the applications (e.g., the applications 134) of the electronic device 210. According to an embodiment, the input module 214 may be an input/output interface 140. For example, the input module 214 may obtain inputs for the applications through a touch screen. According to an embodiment, the input module 214 may acquire inputs for the applications through the communication module 216 (e.g., GPS, BT, and/or Wi-Fi), a sensor module (e.g., an infrared sensor, a laser sensor, and/or an ultrasonic sensor), or a camera module (e.g., a stereo camera and/or a phase difference sensor camera). For example, the input module 214 may obtain an input for making a request for content corresponding to the applications from an external device (For example, the electronic device 104 or wearable electronic device) connected through the communication module 216. Alternatively, the input module 214 may acquire an input (e.g., motion) corresponding to at least some functions of the applications through the sensor module. Alternatively, the input module 214 may acquire an input (e.g., a motion, a quick response code and/or a barcode) corresponding to the applications through the camera module.

According to an embodiment, the input module 214 may acquire a voice command for the applications based on at least one piece of audio information. For example, the input module 214 may acquire audio information (e.g., an audio file and/or an audio signal) from at least one of a operatively coupled audio input device (e.g., a microphone of the electronic device 210 or a microphone of another electronic device) and an external electronic device (e.g., the electronic device 104 and/or the server 106) of the electronic device 210. According to an embodiment, the input module 214 may transmit audio information to at least one external device (e.g., a server) through a communication interface, and at least one external device may analyze the audio information and transmit the analyzed information to the input module 214. The input module 214 may acquire a voice command based on the acquired audio information, for example, through the analysis of the audio information.

The communication module 216 may establish a communication connection with an external electronic device (e.g., the electronic device 104 and/or the server 106) of the electronic device 210. According to an embodiment, the communication module 216 may be the communication interface 160 as illustrated in FIG. 1.

The user interface interworking control module 219 may control a user interface of an external electronic device (e.g., the electronic device 104 and/or the server 106) connected with the electronic device 210 through a communication module. The user interface interworking control module 219 may control at least one of the output module 212, the input module 214, and the communication module 216. According to an embodiment, the user interface interworking control module 219 may acquire a request for transmitting content corresponding to at least one application (e.g., the applications 134) to be executed in the electronic device through the input module 214 and transmit the content and information corresponding to a user interface for providing the content to the external electronic device in response to the transmission request.

According to an embodiment, content corresponding to the applications may include multimedia provided to a user by the at least one application or the external electronic device. For example, the content may include text information (e.g., a text message and/or a notification), image information (e.g., a picture and/or an icon), audio information (e.g., a notification sound and/or a voice message), tactile information (e.g., a vibration) or video information. For example, in a movie-related application, content corresponding to the application may include a movie title, showing dates of a movie, or a movie plot as text information, include a poster, a photo of actors/actresses, or seat information as image information, and include a preview as video information. According to an embodiment, content corresponding to the application may be stored in a memory (e.g., the memory 130) of the electronic device 210 or receive from an external electronic device through the communication module 216.

According to an embodiment, the user interface interworking control module 219 may receive a request for transmitting content from an external electronic device (e.g., the electronic device 104) or acquire the request from the user corresponding to the electronic device 210. For example, the user interface interworking control module 219 may receive a request for content from an external electronic device through the communication module 216. Alternatively, the user interface interworking control module 219 may acquire a request for transmitting content based on a user input acquired for at least one application displayed through a display of the electronic device 210.

According to an embodiment, the user interface interworking control module 219 may transmit content corresponding to at least one application and information corresponding to a user interface for providing the content to an external electronic device (e.g., the electronic device 104) through the communication module 216 in response to the request for transmitting the content.

According to an embodiment, the user interface may include a visual interface including at least one of a label, a button, a slider, a thumbnail, a list, a spin, progress bar, a progress image, a graph, a swipe, a watch, a media control, a time, or a date. According to an embodiment, information corresponding to a user interface may include at least one of a type, a color, a position, a blank space, a size, an arrangement, a background, a state, or an identifier of at least one user interface. For example, information corresponding to a user interface for providing/displaying content may include one or more instructions for providing/displaying content by using a thumbnail. Further, information corresponding to a user interface may include at least one of a color, a position, a blank space, a size, an arrangement, a background, a state, or an identifier of at least one user interface.

According to an embodiment, the user interface may include a haptic interface to be provided at an external electronic device (e.g., the electronic device 104). For example, the haptic interface may provide information to the user by using stimulation (e.g., a vibration, a motion, and/or a force) delivered through user's skin. For example, the haptic interface may include vibration or pressure using an actuator, an electrostatic vibration, and/or an electrical stimulation. According to an embodiment, information on the haptic interface may include information on at least one of a type, intensity, a direction, a position, a time, a pattern, or an identifier of at least one haptic interface.

According to an embodiment, the user interface may include an audio interface provided by an external electronic device (e.g., the electronic device 104). For example, the audio interface may provide information to the user by using user's auditory sense. For example, the audio interface may provide information to the user by using a voice (e.g., a technology for automatically converting text to speech) and/or a notification sound. According to an embodiment, information on the audio interface may include information on at least one of a type, intensity, a direction, a position, a time, a pattern, and an identifier of at least one audio interface.

According to an embodiment, the user interface interworking control module 219 may receive an input related to content provided through an external electronic device from the external electronic device. According to an embodiment, the user interface interworking control module 219 may perform a function of at least one application in response to an input related to the content and transmit another content (e.g., new content) related to the function to an external electronic device. Alternatively, the user interface interworking control module 219 may display the content related to the function through the output module 212.

FIG. 2B is a block diagram of an electronic device according to an embodiment of the present disclosure. For example, the electronic device may receive content from another electronic device and provide/display the content through a user interface.

Referring to FIG. 2B, an electronic device 230 is illustrated, where the electronic device may include an output module 232, an input module 234, a communication module 236, and a user interface control module 239. According to an embodiment, the output module 232, the input module 234, the communication module 236, and the user interface control module 239 may be configured by software (e.g., a programming module) and/or hardware (e.g., an integrated circuit), or a combination thereof. Further, although the output module 232, the input module 234, the communication module 236, and the user interface control module 239 are illustrated as separate blocks in FIG. 2B, at least some (e.g., two or more) of the output module 232, the input module 234, the communication module 236, and the user interface control module 239 may be configured by one module (e.g., a software module and/or a hardware module) in one embodiment.

The output module 232 may output information to the user. According to an embodiment, the output module 232 may be the input/output interface 140. For example, the output module 232 may output information through a functionally connected display (e.g., the display 150). For example, the electronic device 230 may output content through a display corresponding to the output module 232. The input module 234 may acquire an input for the content. According to an embodiment, the input module 234 may be an input/output interface 140. The communication module 236 may establish a communication connection with an external electronic device (e.g., the electronic device 210) of the electronic device 230. According to an embodiment, the communication module 236 may be the communication interface 160 as illustrated in FIG. 1.

The user interface control module 239 may present, at the electronic device 230, content corresponding to an application to be executed in an external electronic device (e.g., the electronic device 210) connected to the electronic device 230. According to an embodiment, the user interface control module 239 may control at least one of the output module 232, the input module 234, and the communication module 236. According to an embodiment, the user interface control module 239 may receive content corresponding to an application to be executed in an external electronic device and information corresponding to a user interface for providing the content from the external electronic device through the communication module 236. The user interface control module 239 may present the content by using at least one user interface corresponding to the information. For example, the user interface control module 239 may receive a plurality of images and one or more instructions for providing/displaying the plurality of images through a list. The user interface control module 239 may present a plurality of images on a display via a list.

According to an embodiment, the user interface control module 239 may receive content corresponding to a first application and a second application to be executed in an external electronic device. For example, the user interface control module 239 may receive first content corresponding to the first application and second content corresponding to the second application and provide the first content and the second content via at least one user interface. For example, the user interface control module 239 may control a user interface of the electronic device 230 in accordance with a plurality of applications to be executed in an external electronic device. For example, the user interface control module 239 may control a user interface of the electronic device 230 based on control signals (e.g., content and information corresponding to a user interface) received from a plurality of applications to be executed in an external electronic device.

According to an embodiment, the user interface control module 239 may display a representation corresponding to an application to be executed in an external electronic device. For example, the user interface control module 239 may receive information corresponding to an application from an external electronic device and present a representation (e.g., an icon and/or a text) corresponding to the application via a display. According to an embodiment, when a communication connection with an external electronic device is disconnected, the user interface control module 239 may hide the representation corresponding to the application. For example, the user interface control module 239 may display the representation corresponding to the application only when the communication connection with the external electronic device is made. According to an embodiment, the user interface control module 239 may acquire an input related to the representation corresponding to the application and transmit a signal for requesting content corresponding to the representation to the external electronic device in response to the input.

According to an embodiment, when a communication connection with an external electronic device is established, the user interface control module 239 may receive information corresponding to an application (e.g., information on an icon, a name, an identifier, and/or a category) from the external electronic device. For example, the application is to be executed through an interworking with the external device 230 among a plurality of applications to be executed in the external electronic device (e.g., the electronic device 210). The user interface control module 239 may display a representation (e.g., an icon and/or text) corresponding to an application on a display based on the information. When a user input (e.g., an application execution request) for the representation is obtained, the user interface control module 239 may transmit a content request (or an execution request) to an external electronic device in order to show content corresponding to the application. When content corresponding to the application and information on a user interface for providing the content are received, the user interface control module 239 may provide/display the content based on the information.

According to an embodiment, the user interface control module 239 may acquire an input for the provided content and make a control to transmit a control signal to an external electronic device, so as to execute at least some functions of the application through the external electronic device in response to the input. For example, the external electronic device may execute at least one function of the application based on the received control signal and transmit information related to a result of the execution (e.g., new content) to the electronic device 230 (e.g., user interface control module 239).

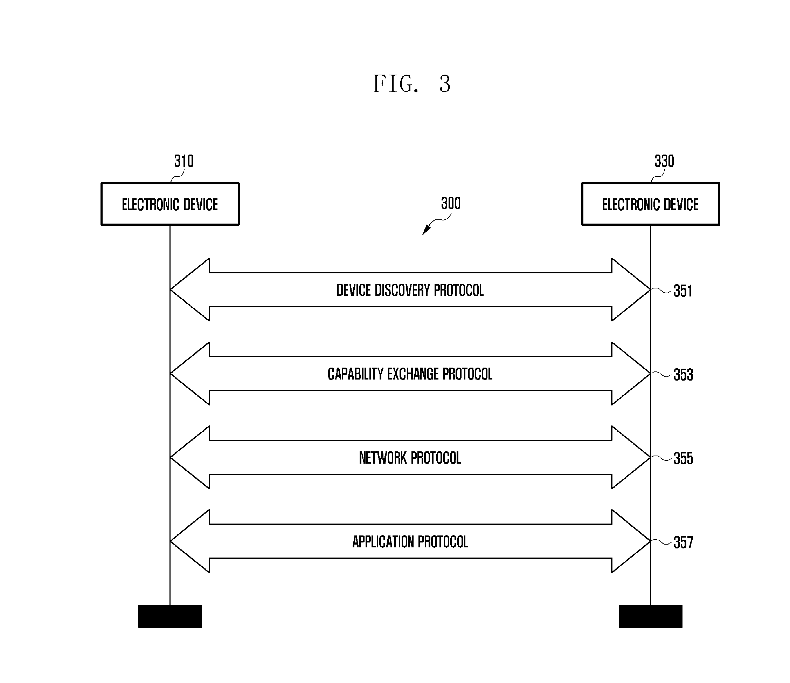

FIG. 3 illustrates communication protocols between electronic devices according to an embodiment of the present disclosure.

Referring to FIG. 3, communication protocols 300 between an electronic device 310 and an electronic device 330 is illustrated, where the communication protocols 300 may include a device discovery protocol 351, a capability exchange protocol 353, a network protocol 355, and an application protocol 357.

According to an embodiment, the device discovery protocol 351 may be a protocol that allows electronic devices (e.g., the electronic device 310 and/or the electronic device 330) to detect an external electronic device which can communicate with the electronic devices or to be connected to the detected external electronic device. For example, the electronic device 310 (e.g., the electronic device 210) may detect the electronic device 330 (e.g., the electronic device 230) as a device which can communicate with the electronic device 310 by using the device discovery protocol 351 through a communication method (e.g., Wi-Fi, BT, USB and the like) which can be used by the device discovery protocol 310. For a communication connection with the electronic device 330, the electronic device 310 may acquire identification information of the electronic device 330 detected through the device discovery protocol 351 and store the acquired identification information. For example, the electronic device 310 may establish a communication connection with the electronic device 330 at least based on the identification information.

According to an embodiment, the device discovery protocol 351 may be a protocol for an authentication between electronic devices. For example, the electronic device 310 may perform an authentication between the electronic device 310 and the electronic device 330 based on communication information (e.g., a media access control (MAC) address, a universally unique identifier (UUID), a service set identifier (SSID), and an Internet protocol (IP) address) for the connection with the electronic device 330.

According to an embodiment, the capability exchange protocol 353 may be a protocol for exchanging information related to a service function which is supported by at least one of the electronic device 310 and the electronic device 330. For example, the electronic device 310 and the electronic device 330 may exchange information related to a service function currently provided by each of the electronic device 310 and the electronic device 330 through the capability exchange protocol 353. The exchangeable information may include identification information indicating a particular service among a plurality of services which can be supported by the electronic device 310 and the electronic device 330. For example, the electronic device 310 may receive, from the electronic device 330, identification information of a particular service provided by the electronic device 330 through the capability exchange protocol 353. Accordingly, the electronic device 310 may determine whether the electronic device 310 can support the particular service based on the received identification information.

According to an embodiment, the network protocol 355 may be a protocol for controlling flows of data which are transmitted/received to provide a service interworking between the electronic devices (e.g., the electronic device 310 and the electronic device 330) which are connected to communicate with each other. For example, at least one of the electronic device 310 and the electronic device 330 may control an error or data quality by using the network protocol 355. Additionally or alternatively, the network protocol 355 may determine a transport format of data transmitted/received between the electronic device 310 and the electronic device 330. Further, at least one of the electronic device 310 and the electronic device 330 may at least manage a session (e.g., connect and/or terminate a session) for a data exchange between the electronic devices by using the network protocol 355.

According to an embodiment, the application protocol 357 may be a protocol for providing a process or information for exchanging data related to a service provided to an external electronic device. For example, the electronic device 310 (e.g., the electronic device 210) may provide a service to the electronic device 330 (e.g., the electronic device 230) through the application protocol 357. According to an embodiment, the electronic device 310 may transmit content corresponding to an application to be executed in the electronic device 310 and information on a user interface for providing the content to the electronic device 330 through the application protocol 357.

According to an embodiment, the communication protocol 300 may include a standard communication protocol, a communication protocol designated by an individual or organization (e.g., a communication protocol self-designated by a communication device manufacturing company and/or a network supplying company) or a combination thereof.

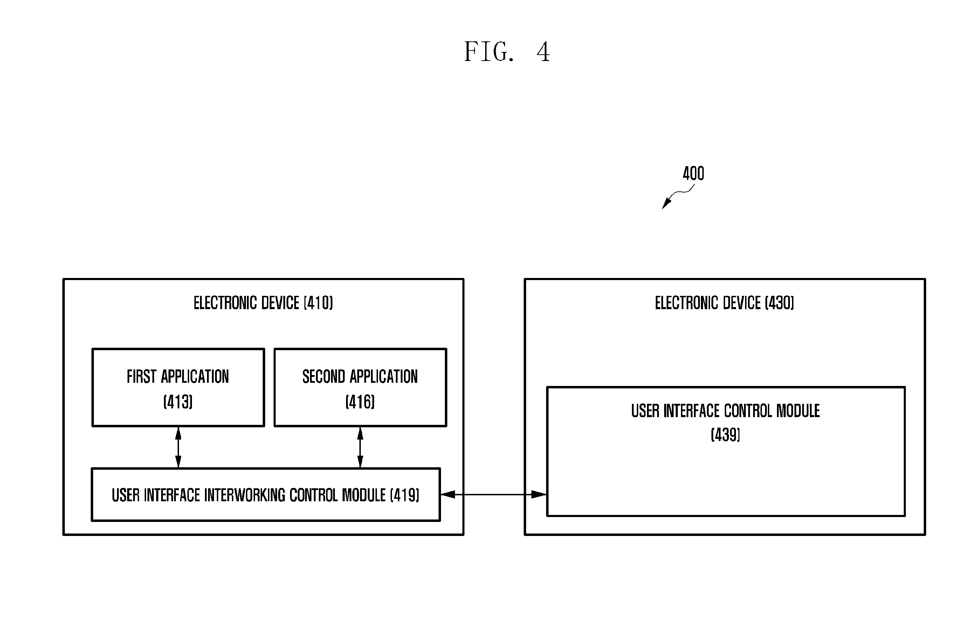

FIG. 4 illustrates a network environment including an electronic device according to an embodiment of the present disclosure.

Referring to FIG. 4, a network environment 400 is illustrated, where the network environment 400 includes an electronic device 410 (e.g., the electronic device 210) that may include a first application 413, a second application 416, and a user interface interworking control module 419 (e.g., the user interface interworking control module 219). The electronic device 430 (e.g., the electronic device 230) may include a user interface control module 439 (e.g., the user interface control module 239).

According to an embodiment, the user interface interworking control module 419 of the electronic device 410 may control a user interface of the electronic device 430 through the user interface control module 439 of the electronic device 430. For example, the user interface interworking control module 419 of the electronic device 410 may acquire first content corresponding to the first application 413 and second content corresponding to the second application 416 from the first application 413 and the second application 416, respectively. The user interface interworking control module 419 may transmit the acquired first and second content to the user interface control module 439 of the electronic device 430.

According to an embodiment, the user interface interworking control module 419 may acquire content corresponding to an application and information corresponding to a user interface for providing the content from the application. The user interface interworking control module 419 may transmit the acquired content and the information to the user interface control module 439. Alternatively, when the content corresponding to the application is acquired, the user interface interworking control module 419 may determine a user interface for providing the content and transmit information corresponding to the user interface, to the user interface control module 439.

According to an embodiment, the user interface control module 439 may provide the content based on the information received from the user interface interworking control module 419. Further, the user interface control module 439 may transmit information corresponding to an input related to the provided content to the user interface interworking control module 419 such that an application or a function corresponding to the content in the electronic device 410 can be performed in response to the input.

According to an embodiment, the user interface interworking control module 419 and the user interface control module 439 may be a software module (e.g., the kernel 131, the middleware 132, the API 133, and/or the application 134) and/or a hardware module (e.g., the processor 120, an Application-Specific Integrated Circuit (ASIC) chip, a Field-Programmable Gate Arrays (FPGAs), and/or a programmable-logic device).

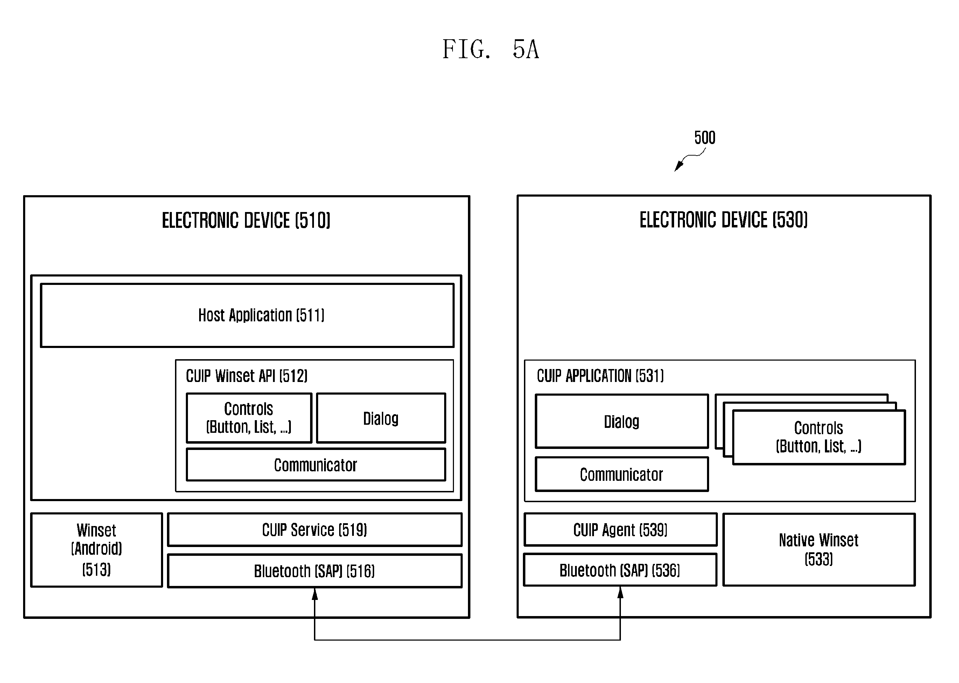

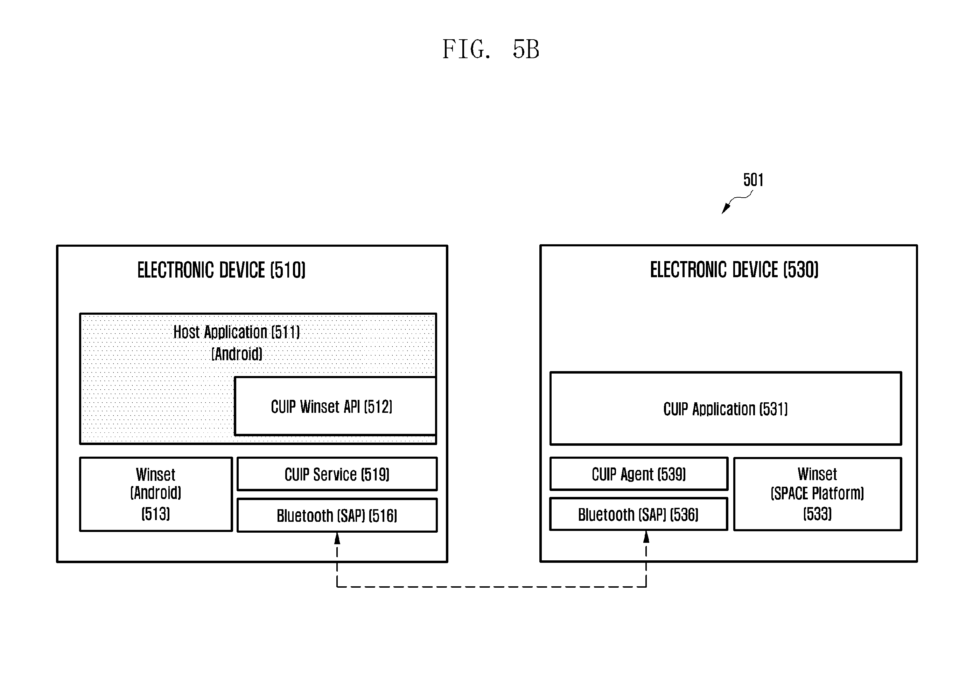

FIGs. 5A and 5B illustrate network environments including electronic devices according to various embodiments of the present disclosure.

Referring to FIGs. 5A and 5B, a network environment 500 and a network environment 501 are illustrated, where the network environment 500 may include an electronic device 510 (e.g., the electronic device 210). The electronic device 510 may include a host application 511, a winset module 513, a Bluetooth module 516, and a Companion User Interface Platform (CUIP) service module 519. For example, the host application 511 (e.g., the application 134) may be a set of one or more instructions including one or more instructions based on CUIP winset API 512. For example, the one or more instructions based on CUIP winset API 512 may include one or more instructions for controlling a user interface including at least one of an information display window (dialog), a label, a button, a slider, a thumbnail, a list, a spin, a progress bar, a progress image, a graph, a swipe, a watch, a media control, a time, or a date, which are provided by an electronic device 530. According to an embodiment, the host application 511 is an application programmed based on CUIP winset API 512 and may transmit/provide content or one or more instructions based on CUIP winset API 512 to the CUIP service module 519. According to an embodiment, as illustrated in FIG. 5B, the CUIP winset API 512 may be at least a part of the host application 511. The winset module 513, for example, may be an Android widget module. The Bluetooth module 516, for example, may be compatible with the Samsung Accessory Protocol (SAP).

According to an embodiment, the CUIP service module 519 may be the user interface interworking control module 219 as illustrated in FIG. 2A. For example, the CUIP service module 519 may acquire content corresponding to the host application 511 and information corresponding to a user interface (e.g., instructions based on CUIP winset API 512) for providing the content from the host application 511. The CUIP service module 519 may transmit the content and the information to the electronic device 530 through the Bluetooth module 516. According to an embodiment, the Bluetooth module 516 may be the communication module 216 and communicate based on the part of the communication protocol 300.

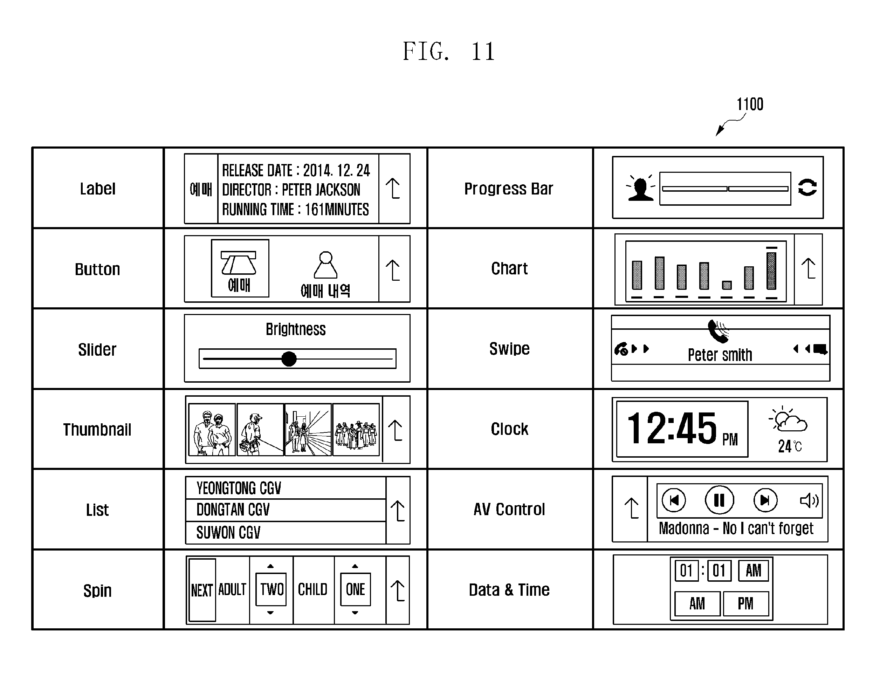

The electronic device 530 may include a CUIP application 531, a winset module 533, a Bluetooth module 536, and a CUIP agent module 539. For example, the winset module 533 may include a user interface including a label, a button, a slider, a thumbnail, a list, a spin, a progress bar, a progress image, a graph, a swipe, a watch, a media control, a time, or a date, which are to be provided by the electronic device 530. For example, the winset module 533 may include a user interface corresponding to the CUIP winset API 512. Additional information on the user interface provided by the winset module 533 will be provided through FIG. 11 described below. For example, the winset module 533 may be native software of the electronic device 530. Referring to FIG 5B, the winset module 533 may be native software operable with a platform (e.g., SPACE platform of Samsung Electronics) of the electronic device 530.

According to an embodiment, the CUIP agent module 539 may be the user interface control module 239. For example, the CUIP agent module 539 may receive content corresponding to an application 511 and information corresponding to a user interface for providing the content from the electronic device 510 through the Bluetooth module 536. For example, the CUIP agent module 539 may present the content through the user interface corresponding to the information based on the received content and the information corresponding to the user interface for providing the content via the CUIP application 531. According to an embodiment, the CUIP application 531 may include the output module 232 and/or the input module 234.

For example, a plurality of applications (e.g., host application 511) based on the CUIP winset API 512 may present content at the electronic device 530 by controlling a user interface of the electronic device 530 without installing at least one application corresponding to the plurality of applications at the electronic device 530. For example, when the user develops a plurality of applications to be executed in the electronic device 510, the user may not develop applications to be executed in the electronic device 530. Further, the user may control the electronic device 530 through the electronic device 510 without additionally installing an application to be executed in the electronic device 530. According to an embodiment, at least one application of the electronic device 510 may include an application received from a server or an external electronic device and then installed.

For example, the electronic device 530 may provide content corresponding to a plurality of applications without installing separate applications corresponding to the plurality of applications of the electronic device 510 in the electronic device 530. Further, the electronic device 530 may provide functions corresponding to the plurality of applications without installing applications for providing the functions corresponding to the plurality of applications of the electronic device 510 in the electronic device 510. For example, the electronic device 530 may control the applications of the electronic device 510 or the functions through the CUIP agent module 539 or the CUIP application 531. Accordingly, the electronic device 530 may provide the applications of the electronic device 510 or the functions also through lower specification or lower power hardware in comparison with the electronic device 510. For example, the electronic device 530 may be a wearable electronic device. According to an embodiment, the electronic device 530 may include a structure (e.g., a strap and/or a supporter) to be worn on at least the part of a user's body (e.g., a head and/or a wrist). Further, the electronic device 530 may include a structure (e.g., a clip) to be attached to an external object (e.g., a cloth and/or a bag).

Although only the CUIP application 531 is illustrated as an application of the electronic device 530 in FIGs. 5A and 5B, additional applications may be installed in the electronic device 530. For example, the additional applications may include an application corresponding to an application to be executed in the electronic device 510. Alternatively, the additional applications may include an application to be executed in the electronic device 530 alone.

According to various embodiments, the electronic device (e.g., the electronic device 230 and/or the electronic device 530) may include a wireless communication module (e.g., the communication module 236 and/or the Bluetooth module 536) to establish a communication connection with an external electronic device (e.g., the electronic device 210 and/or the electronic device 510). The electronic device includes a user interface control module (e.g., the user interface control module 239 and/or the CUIP agent module 539). For example, the electronic device may include a wearable electronic device or a smart home appliance. For example, the external electronic device may include a host electronic device controlling a user interface of the electronic device.

According to various embodiments, the user interface control module is configured to receive content corresponding to an application to be executed in the external electronic device and information corresponding to one or more user interfaces to be presented at the electronic device. The user interface control module is configured to present at least one portion of the content using at least one user interface of the one or more user interfaces corresponding to the information. According to various embodiments, the information may include one or more instructions to be used to control the at least one user interface.

According to various embodiments, the application may include a first application and a second application, and the user interface control module may receive first content corresponding to the first application and second content corresponding to the second application as at least part of the content.

According to various embodiments, the user interface control module may transmit a signal to the external electronic device such that at least one function of the application can be performed via the external device in response to an input received in relation with the at least one portion.

According to various embodiments, the user interface control module may receive another information corresponding to the application from the external electronic device and present a representation (e.g., an icon and/or text) corresponding to the application via a display operatively coupled with the wearable electronic device based at least in part on the other information. The user interface control module may obtain an input in relation with the representation and transmit a request for the content to the external electronic device in response to the input. Further, the user interface control module may hide the representation from the display based on a determination that the communication connection with the external electronic device is disconnected.

According to various embodiments, the user interface may include at least one of an information display window, a label, a button, a slider, a thumbnail, a list, a spin, a progress bar, a progress image, a graph, a swipe, a watch, a media control, a time, or weather information. The information on the user interface may include information on at least one of a type, a color, a position, a blank space, a size, an arrangement, a background, a state, or an identifier of the at least one user interface. The user interface according to various embodiments may include at least one of an audio interface, a haptic interface, or a visual interface.

According to various embodiments, the electronic device (e.g., the electronic device 210 and/or the electronic device 510) may include a wireless communication module (e.g., the communication module 216 and/or the Bluetooth module 516) to establish a communication connection with an external electronic device (e.g., the electronic device 230 and/or the electronic device 530) and a interworking control module (e.g., the user interface interworking control module 219 and/or the CUIP service module 519). For example, the electronic device may include a host electronic device and the external electronic device may include one of a wearable electronic device or a smart home appliance.

According to various embodiments, the interworking control module may obtain a request for content corresponding to at least one application (e.g., the application 134 and/or the host application 511) capable of being executed in the electronic device. The interworking control module may transmit the content and information corresponding to one or more user interfaces to the external electronic device via the wireless communication module in response to the request. The one or more interfaces are to be performed at the external electronic device to present the content.

According to various embodiments, the interworking control module may obtain the request as a user input via a display operatively coupled with the electronic device, or from the external electronic device via the wireless communication module.

According to various embodiments, the interworking control module may obtain, from the external electronic device, an input received in relation with at least one portion of the content presented at the external electronic device. The interworking control module may perform a function of the at least one application in response to the input and transmit another content related to the function to the external electronic device. The interworking control module may perform the function of the at least one application in response to the input and display another content related to the function via a display operatively coupled with the electronic device.

According to various embodiments, an electronic device (e.g., the electronic device 104 or a wearable device) comprises a processor, a wireless communication module to establish a communication connection with another electronic device external to the electronic device, and memory to store an application and a user interface control module. The user interface control module, when executed by the processor, is configured to receive, via the wireless communication module and from the other electronic device, content corresponding to another application to be executed at the other electronic device and information corresponding to one or more user interfaces to be presented at the electronic device. Further, the user interface control module is configured to present, using the application, at least one portion of the content via at least one user interface of the one or more user interfaces.

According to various embodiments, the information comprises one or more instructions to be used to control the at least one user interface. The information comprises one or more instructions to specify the one or more user interfaces to present the content. The other application includes a first application and a second application. According to various embodiments, the user interface control module is configured to receive, as the content, first content corresponding to the first application and second content corresponding to the second application.

According to various embodiments, the user interface control module is configured to transmit a signal to the other electronic device such that at least one function of the other application can be performed via the other electronic device, in response to an input received in relation with the at least one portion.

According to various embodiments, the user interface control module is configured to receive another information corresponding to the other application, and present a representation corresponding to the other application via a display operatively coupled with the electronic device based at least in part on the other information. According to various embodiments, the user interface control module is configured to transmit a request for the other application to the other electronic device such that the other application can be executed at the other electronic device, in response to an input received in relation with the representation.

According to various embodiments, an electronic device (e.g., the electronic device 101 or a host device) comprises a processor, a communication module to establish a communication connection with another electronic device external to the electronic device, and memory to store an application and an interworking control module. According to various embodiments, the interworking control module is configured to obtain content corresponding to the application and information corresponding to one or more user interfaces to be performed at the other electronic device to present the content, and transmit the content and the information to the other electronic device via the communication module. According to various embodiments, the interworking control module is configured to obtain a request for the content from the other electronic device.

According to various embodiments, the interworking control module is configured to obtain, via the other electronic device, an input received in relation with at least one portion of the content presented at the other electronic device. According to various embodiments, the application is configured to perform a function of the application in response to the input, and transmit another content related to the function to the other electronic device via the interworking control module.

According to various embodiments, the application comprises one or more applications received from a server or a third electronic device. According to various embodiments, the application comprises one or more instructions using an application programming interface corresponding to the interworking control module. According to various embodiments, at least one of the one or more instructions is to be performed independent of capacity of hardware of the other electronic device. According to various embodiments, at least one of the one or more instructions is to specify the one or more user interfaces to present the content. According to various embodiments, the application comprises at least one of a message application, an e-mail application, a calendar application, an alarm application, a health care application, or an environmental information application.

According to various embodiments, an electronic device (e.g., a wearable electronic device) comprises a processor, a wireless communication module to establish a communication connection with another electronic device (e.g., a host electronic device) external to the electronic device, and memory to store an application and a user interface control module. According to various embodiments, when executed by the processor, the user interface control module is configured to receive content corresponding to another application to be executed in the other electronic device and information corresponding to a user interface to present the content, from the other electronic device via the wireless communication module. Further, the user interface control module is configured to provide at least one of the content or the information to the application. According to various embodiments, when executed by the processor, the application is configured to present the content using at least one user interface corresponding to the information.

According to various embodiments, an electronic device (e.g., the electronic device 101 or a host device) comprises a processor, a communication module to establish a communication connection with another electronic device (e.g., the electronic device 104, a wearable device or a smart home appliance) external to the electronic device, and memory to store an application and an interworking control module. According to various embodiments, when executed by the processor, the application is configured to provide to the interworking control module, content corresponding to the application and information corresponding to a user interface to present the content at the other electronic device. According to various embodiments, when executed by the processor, the interworking control module is configured to transmit the content and the information to the other electronic device via the communication module.

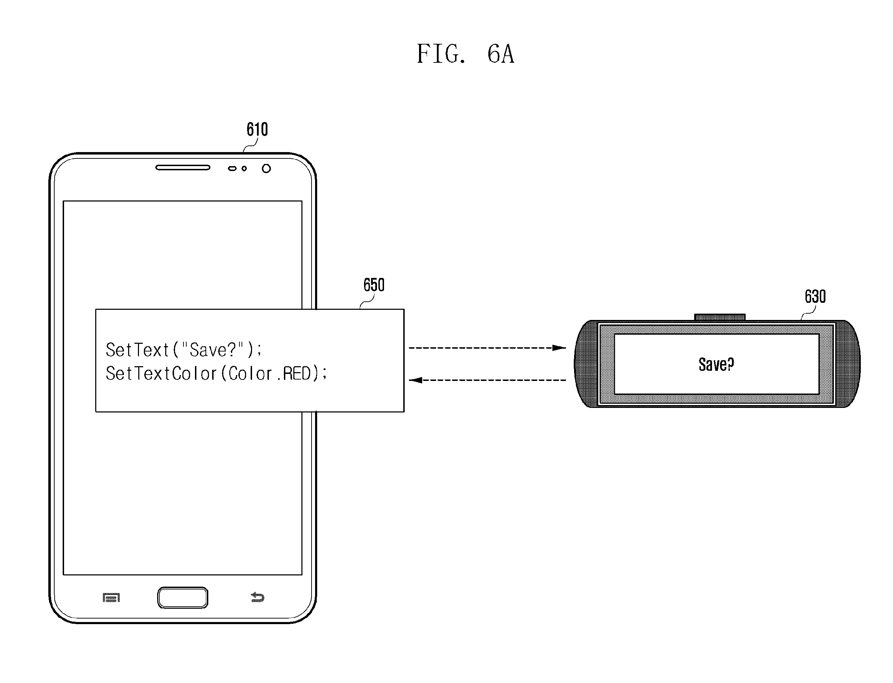

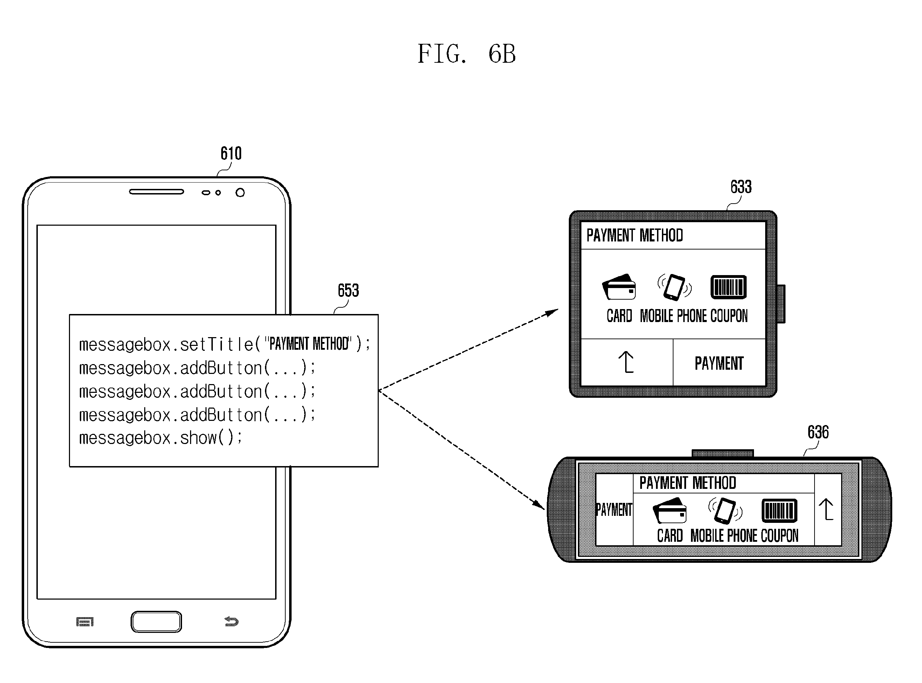

FIGS. 6A and 6B illustrate examples in which electronic devices provide content through external electronic devices according to various embodiments of the present disclosure.

Referring to FIG. 6A, an electronic device 630 and an electronic device 610 (e.g., the user interface interworking control module 219 and/or the CUIP service module 519) are illustrated, where the electronic device 610 may transmit content (e.g., "save?") and information (e.g., a type and a color) corresponding to a user interface for providing the content to the electronic device 630. According to an embodiment, an application of the electronic device 610 may include instructions 650 (e.g., instructions based on the CUIP winset API 512) for controlling the user interface of the electronic device 630. For example, the electronic device 610 may transmit content and one or more instructions to the electronic device 630 based on the instructions 650. According to an embodiment, the electronic device 630 (e.g., the user interface control module 239 and/or the CUIP agent module 539) may provide received content through a user interface corresponding to the information.

Referring to FIG. 6B, electronic devices 610, 633 and 636 are illustrated, where the electronic device 610 (e.g., the electronic device 210) may present content through the electronic devices 633 and 636 (e.g., the electronic device 230). According to an embodiment, the electronic device 610 may transmit content (e.g., an icon and/or a text) and information (e.g., a message box and a title and/or a button thereof) corresponding to one or more user interfaces for providing the content to at least one of the electronic device 633 and the electronic device 636 based on instructions 653 for controlling the one or more user interfaces. According to an embodiment, the electronic device 633 and the electronic device 636 may have other pieces of hardware (e.g., a display). The electronic device 633 (e.g., the user interface control module 239) may determine a layout of the content to be provided, in accordance with the hardware of the electronic device 633. Further, the electronic device 636 (e.g., the user interface control module 239) may determine a layout of the content to be provided, in accordance with the hardware of the electronic device 636. For example, the electronic device 633 may determine a layout for presenting content based on a resolution of the display. For example, the electronic device 610 may transmit one or more instructions for providing the content (e.g., "payment") via a button to the electronic device 633. The electronic device 633 may provide the content (e.g., "payment") via the button, and the layout in which the button is provided may be determined based on an attribute of the display of the electronic device 633.

According to an embodiment, the instructions 653 for controlling the user interface may be included in the application (e.g., the host application 511) to be executed in the electronic device 610. For example, the application of the electronic device 610 may include the instructions 653 for designating the user interface regardless of the hardware included in at least one electronic device (e.g., the electronic device 633 and/or the electronic device 636) connected to the electronic device 610. For example, in developing an application, a developer may make the instructions 653 for controlling an external electronic device regardless of hardware of the external electronic device (e.g., a wearable electronic device) connected to the electronic device 610. The external electronic device may determine a layout in the external electronic device based on the instructions 653. For example, the external electronic device may determine a display layout of the at least one user interface based at least in part on capacity of the wearable electronic device or the content.

According to an embodiment, the electronic devices 630, 633, and/or 636 may include a structure (e.g., a strap and/or a supporter) to be worn on at least the part of a user's body (e.g., a head and/or a wrist). Further, the electronic devices 630, 633, and/or 636 may include a structure (e.g., a clip) to be attached to an external object (e.g., a cloth and/or a bag).

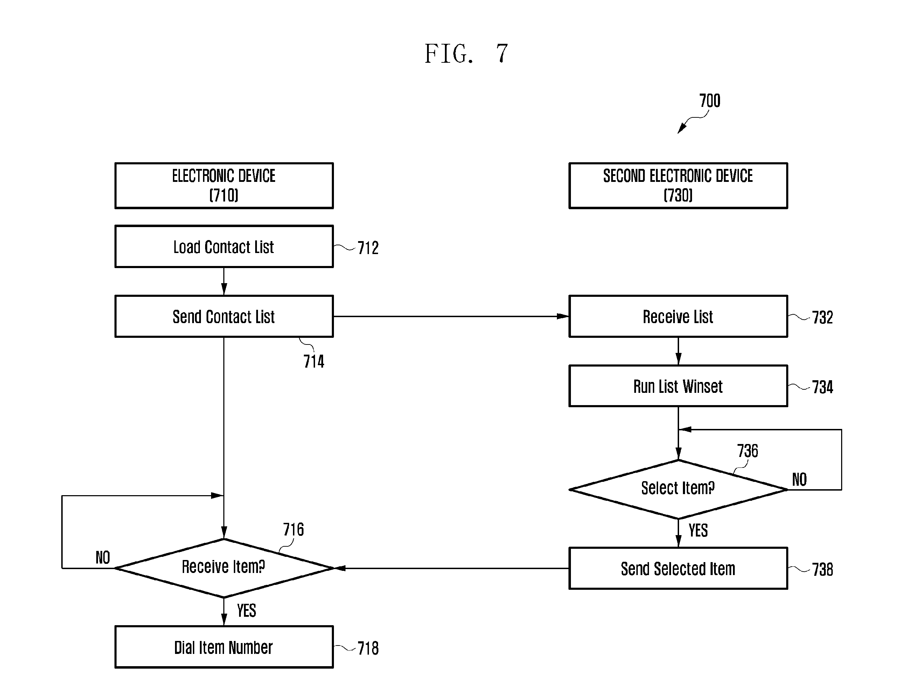

FIG. 7 is a flowchart in which an electronic device provides content through an external electronic device according to an embodiment of the present disclosure.

Referring to FIG. 7, a flowchart 700 is illustrated, where the flowchart 700 illustrates that an electronic device 710 (e.g., the user interface interworking control module 219 and/or the CUIP service module 519) may provide a function of an application by interworking with a second electronic device 730. The electronic device 710 may present content (e.g., contacts) corresponding an application (e.g., a call) through the second electronic device 730. The electronic device 710 may acquire an input related to the content presented at the second electronic device 730 from the second electronic device 730, and provide a function (e.g., a call connection) of the application in response to the input.

According to an embodiment, in operation 712, the electronic device 710 may acquire a request for transmitting content corresponding to an application. For example, the electronic device 710 may load contacts from the memory. In operation 714, the electronic device 710 may transmit the content corresponding to the application to the second electronic device 730. Further, the electronic device 710 may transmit information corresponding to a user interface (e.g., a list), the information including a request for providing/displaying the content by using a list. In operation 732, the second electronic device 730 may receive the content and the information corresponding to the user interface. In operation 734, the second electronic device 730 may provide/display the content to the user through a list user interface based on the information corresponding to the user interface (e.g., run list winset). In operation 736, the second electronic device 730 may acquire a user input (e.g., a user input for selecting one or more contacts) related to the content presented at the second electronic device 730. If the user does not select an item in operation 736, operation 736 will continue until the user selects an item and continues to operation 738. In operation 738, if the user selects an item in operation 736, the second electronic device 730 may transmit information (e.g., selected contacts) corresponding to the user input related to the content to the electronic device 710. In operation 716, the electronic device 710 may receive the information corresponding to the user input from the second electronic device 730. If an item is not received by the electronic device 710 in operation 716, operation 716 will continue until the electronic device receives the item from the second electronic device 730 and then continues to operation 718. In operation 718, the electronic device 710 may execute a function (e.g., dialing a number based on the received item to establish a call connection) of the application in response to the input.

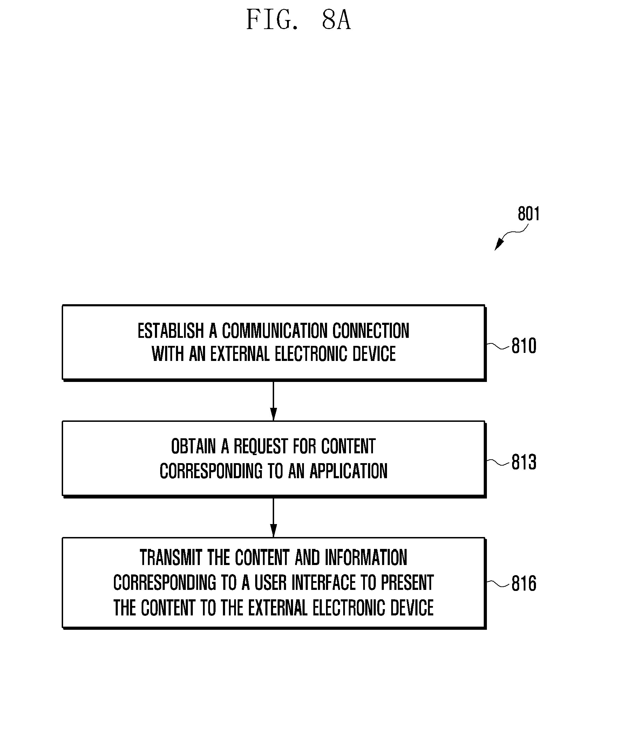

FIG. 8A is a flowchart in which an electronic device presents content through an external electronic device according to an embodiment of the present disclosure.

Referring to FIG. 8A, a flowchart 801 is illustrated, where the flowchart 801 illustrates that in operation 810, an electronic device (e.g., the user interface interworking control module 219) may establish a communication connection with an external electronic device (e.g., the electronic device 230). In operation 813, the electronic device may obtain a request for content corresponding to an application. For example, the electronic device may acquire the request related to transmitting the content corresponding to the application capable of being executed at the electronic device, from the external electronic device (e.g., the electronic device 230 and/or the server 106). Alternatively, the electronic device may acquire a request related to transmitting the content corresponding to the application to the external electronic device from the user of the electronic device. In operation 816, the electronic device may transmit the content corresponding to the application and information corresponding to a user interface to present the content to the external electronic device.

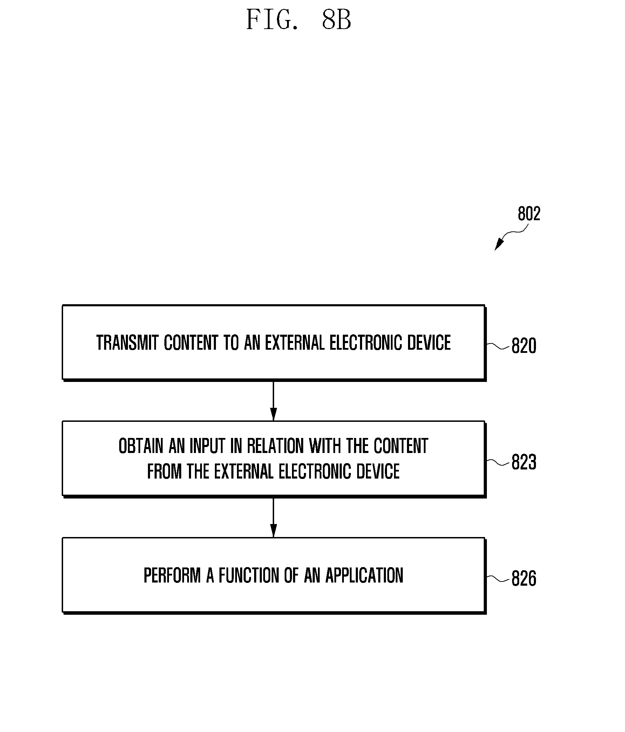

FIG. 8B is a flowchart in which an electronic device provides a function of an application by interworking with an external electronic device according to an embodiment of the present disclosure.

Referring to FIG. 8B, a flowchart 802 is illustrated, where the flowchart 802 illustrates that in operation 820, an electronic device (e.g., the user interface interworking control module 219) may transmit content to an external electronic device (e.g., the electronic device 230). For example, the external electronic device may provide/display the content to the user via the user interface. For example, the external electronic device may output a voice such as "order now" via an audio interface. In operation 823, the electronic device may receive an input corresponding to the content from the external electronic device. For example, when the external electronic device acquires a voice input such as "two hamburgers", the electronic device may receive information corresponding to the voice input from the external electronic device. In operation 826, the electronic device may perform a function of an application in response to the received information corresponding to the voice input. For example, the electronic device may execute a function of the application for ordering two hamburgers.

According to various embodiments, a method of the electronic device (e.g., the electronic device 210 and/or the electronic device 510) comprises establishing a communication connection with the external electronic device (e.g., the electronic device 230 and/or the electronic device 530), obtaining a request for content corresponding to at least one application to be executed in the electronic device, and transmitting the content and information corresponding to one or more user interfaces to the external electronic device via the wireless communication module. The one or more user interfaces are to be performed at the external electronic device to present the content. The information comprises one or more instructions to be used to control the one or more user interfaces.

According to various embodiments, the method may include obtaining the request as a user input via a display operatively coupled with the electronic device, or from the external electronic device via the wireless communication module.

According to various embodiments, the method may include obtaining an input received in relation with the content presented at the external electronic device, from the external electronic device. The receiving the input may include performing a function of the at least one application in response to the input and transmitting another content related to the function to the external electronic device. The receiving the input may include performing the function of the at least one application in response to the input and displaying another content related to the function via a display operatively coupled with the electronic device.

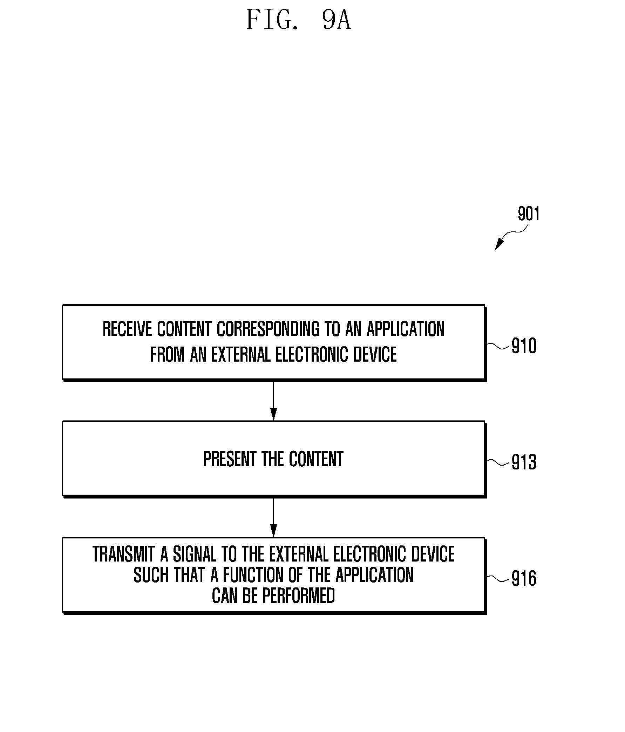

FIG. 9A is a flowchart in which an electronic device presents content according to an embodiment of the present disclosure.

Referring to FIG. 9A, a flowchart 901 is illustrated, where the flowchart 901 illustrates that in operation 910, an electronic device (e.g., the user interface control module 239) may receive content corresponding to an application to be executed in an external electronic device (e.g., the electronic device 210) from the external electronic device. In operation 913, the electronic device may provide/display at least one portion of the content to the user. For example, the electronic device may display the at least one portion of the content on a display. In operation 916, the electronic device may transmit a signal to the external electronic device such that at least one function of the application can be performed at the external device in response to an input received in relation with the at least one portion.

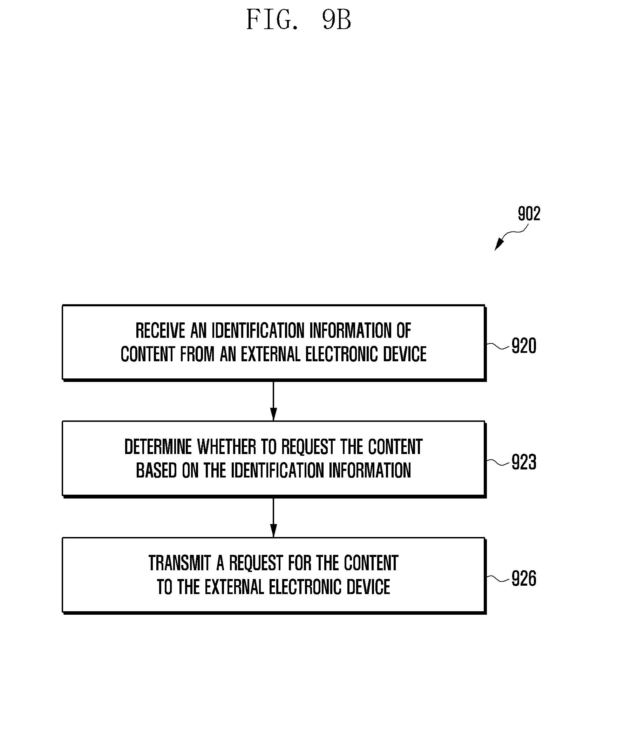

FIG. 9B is a flowchart in which an electronic device receives content from an external electronic device according to an embodiment of the present disclosure.

Referring to FIG. 9B, a flowchart 902 is illustrated, where the flowchart 902 illustrates that in operation 920, an electronic device (e.g., the user interface control module 239) may receive identification information corresponding to content from an external electronic device. For example, the identification information may include one or more pieces of information such as a name, an identifier, and the size of the content. In operation 923, the electronic device may determine whether to request the content to the external electronic device based on the identification information. For example, the electronic device may determine whether there is the content corresponding to the identification information in the memory of the electronic device. Based on a determination that the content is not in the memory of the electronic device, the electronic device may request for the content to the external electronic device. Alternatively, based on a determination that the content is in the memory of the electronic device, the electronic device may make a determination not to make a request for the content. In operation 926, based on the determination to request for the content, the electronic device may request for the content to the external electronic device. For example, the electronic device may receive identification information corresponding to the content from the external electronic device and determine whether to make a request, thereby reducing power consumption in receiving the content. Further, the electronic device may reduce a time in receiving the content.

According to various embodiments, a method of the electronic device (e.g., the electronic device 230) may include receiving content corresponding to an application to be executed in the external electronic device from the external electronic device via a wireless communication module. The method may include presenting at least one portion of the content to the user, and transmitting a signal to the external electronic device such that at least one function of the application can be performed via the external electronic device in response to an input received in relation with the at least one portion. The receiving the content may include receiving information corresponding to one or more user interface to present the content at the electronic device. The presenting may include presenting the at least one portion of the content via at least one user interface of the one or more user interfaces.

According to various embodiments, the method may include receiving another information corresponding to the application and displaying a representation corresponding to the application via a display operatively coupled with the wearable electronic device based on the other information on the application. The displaying the representation may include hiding the representation based on a determination that a communication connection with the external electronic device is disconnected. The displaying the representation may include acquiring an input received in relation with the representation and transmitting a request for the content to the external electronic device in response to the input.

According to various embodiments, the receiving the content may include receiving first content corresponding to a first application and second content corresponding to a second application as at the content.

According to various embodiments, the user interface may include at least one of an information display window, a label, a button, a slider, a thumbnail, a list, a spin, a progress bar, a progress image, a graph, a swipe, a watch, a media control, a time, or weather information.

According to various embodiments, the information may include information corresponding to at least one of a type, a color, a position, a blank space, a size, an arrangement, a background, a state, or an identifier of at least one user interface. According to various embodiments, the user interface may include at least one of an audio interface, a haptic interface, or a visual interface.

According to various embodiments, a method of the electronic device (e.g., the electronic device 230) may include establishing a communication connection with the external electronic device (e.g., the electronic device 210) via a wireless communication module. The method may include receiving content corresponding to an application (e.g., the application 134) to be executed in the external electronic device and information corresponding to one or more user interfaces to be presented at the electronic device. Further, the method may include presenting at least one portion of the content using at least one user interface of one or more user interfaces corresponding to the information. The information may include one or more instructions to be used to control the at least one user interface of the electronic device.

According to various embodiments, the method may include transmitting a signal to the external electronic device such that at least one function of the application can be performed via the external electronic device in response to an input received in relation with the at least one portion.

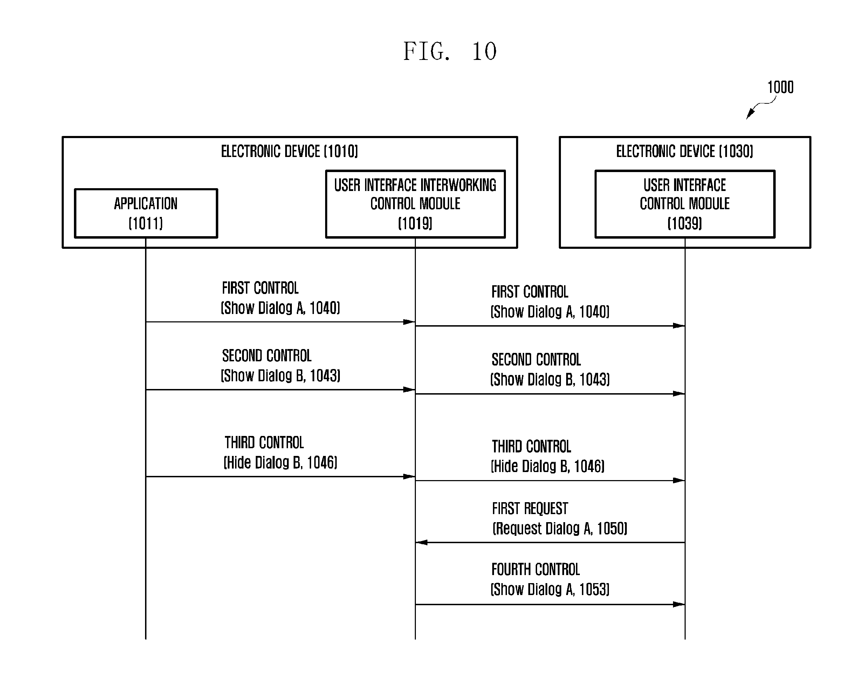

FIG. 10 is a flowchart in which an electronic device presents content through an external electronic device according to an embodiment of the present disclosure.

Referring to FIG. 10, a flowchart 1000 describing operations of an electronic device 1010 and an electronic device 1030 is illustrated, where the electronic device 1010 may include an application 1011 (e.g., the host application 511) and a user interface interworking control module 1019 (e.g., the CUIP service module 519). The electronic device 1030 may include a user interface control module 1039 (e.g., the CUIP agent module 539).

According to an embodiment, in operation 1040, the application 1011 may transmit a first control to the user interface interworking control module 1019. For example, the first control may include first content to be presented through the electronic device 1030 and information (e.g., Show Dialog A) corresponding to a first user interface (e.g., an information display window including dialog) to present the content. The user interface interworking control module 1019 may transmit the first control to the user interface control module 1039 of the electronic device 1030. The user interface control module 1039 may present the first content via the information display window based on the first control. According to an embodiment, the user interface interworking control module 1019 may store information on the first control in a memory.

According to an embodiment, in operation 1043, the application 1011 may transmit a second control to the user interface control module 1039 through the user interface interworking control module 1019. For example, the second control may include second content to be presented through the electronic device 1030 and information (e.g., Show Dialog B) corresponding to a second user interface (e.g., an information display window including dialog) to present the second content. The user interface control module 1039 may present the second content via the information display window based on the second control. According to an embodiment, the user interface interworking control module 1019 may store information on the second control in the memory.

According to an embodiment, in operation 1046, the application 1011 may transmit a third control to the user interface control module 1039 through the user interface interworking control module 1019. For example, the third control may include the second content to be presented through the electronic device 1030 or information (e.g., Hide dialog B) corresponding to the second user interface (e.g., an information display window, dialog) to present the second content. The user interface control module 1039 may stop presenting the second content based on the third control. According to an embodiment, when the first content is stored in the memory of the electronic device 1030, the user interface control module 1039 may present the first content via the first user interface. Alternatively, when the first content are not stored in the memory of the electronic device 1030, the user interface control module 1039 may transmit a first request for the first content to the user interface interworking control module 1019 in operation 1050.

According to an embodiment, in operation 1053, the user interface interworking control module 1019 may transmit a fourth control to the user interface control module 1039 in response to the first request. For example, the fourth control may include the first content or information corresponding to the first user interface to present the first content. For example, the fourth control may be the first control stored in the memory. For example, the user interface interworking control module 1019 may not transmit the first request to the application 1011 and may transmit the fourth control in response to the first request.

According to an embodiment, the user interface control module 1039 may store the first control or the second control in the memory of the electronic device 1030. Further, the user interface control module 1039 may remove at least a part of the first control or the second control from the memory when the first control or the second control is not used for specified time duration. In addition, the user interface control module 1039 may delete at least a part of the first control based on a determination that size of the content included in the second control is larger than or equal to a specified range. According to an embodiment, the specified time duration is not fixed, and may be randomly configured or variably configured according to the used amount of the memory. For example, the memory of the electronic device 1030 may be equal to or smaller than the memory of the electronic device 1010.

FIG. 11 illustrates an example of a user interface by which an electronic device presents content according to an embodiment of the present disclosure.

Referring to FIG. 11, a user interface 1100 is illustrated, where the user interface 1100 may include at least one of a label, a button, a slider, a thumbnail, a list, a spin, a progress bar, a graph/chart, a swipe, a watch/clock, a media/Audio Video (AV) control, a time and date, or weather information. According to an embodiment, the user interface 1100 may be a user interface provided by the winset module 533. Further, the user interface of the electronic device may include an audio interface (not shown) or a haptic interface (not shown).

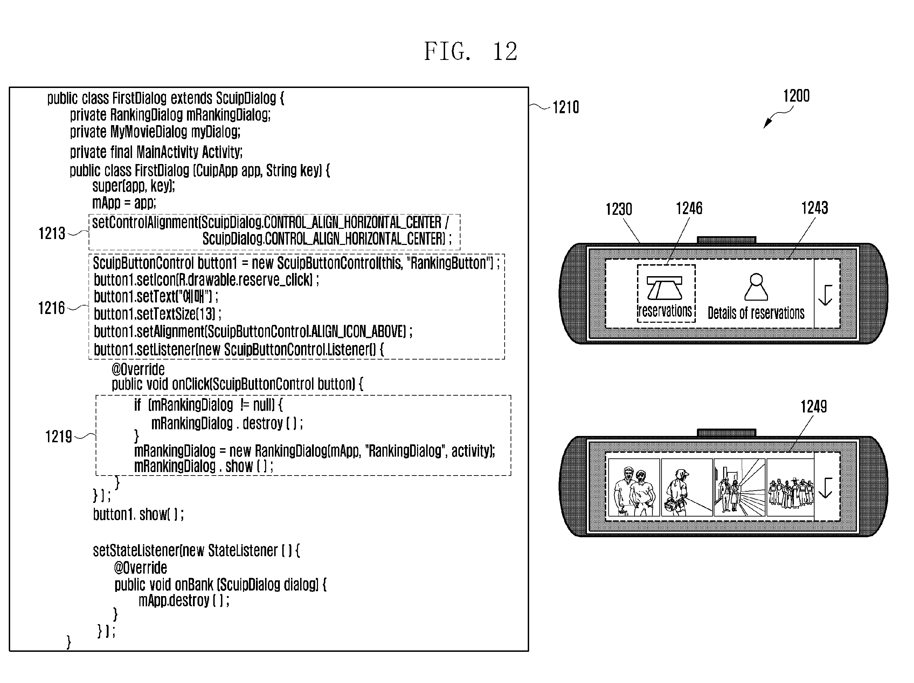

FIG. 12 illustrates an example in which an electronic device presents content according to an embodiment of the present disclosure.

Referring to FIG. 12, an example 1200 is illustrated, in which an application 1210 (e.g., the application 134 and/or the host application 511) to be executed in an external electronic device (e.g., the electronic device 210) may include first instructions 1213, second instructions 1216, and third instructions 1219 for controlling an electronic device 1230 (e.g., the user interface control module 239 and/or the CUIP agent module 539). For example, the first instructions 1213, the second instructions 1216, and the third instructions 1219 may comprises instructions based on the CUIP winset API 512 as illustrated in FIG. 5.

According to an embodiment, the external electronic device (e.g., the user interface interworking control module 219) may receive at least one of the first, second, and third instructions 1213, 1216, and 1219 from the application 1210 and present content via the electronic device 1230 based on the at least one of the first, second, and third instructions 1213, 1216, and 1219. For example, the first instructions 1213 include one or more instructions to control the information display window (e.g., a dialog). The second instructions 1216 includes instructions (e.g. for to control a button (e.g., a size and an attribute) and another instructions to control the content (e.g., a "reservation" or icon) presented through the button. The electronic device 1230 may present an information display window 1243 and a button 1246 based on the received content and the information corresponding to the user interface (e.g., the first instructions 1213 and the second instructions 1216). Further, when the application 1210 acquires an input for the content (or the button), the third instructions 1219 includes a function (e.g., providing new contents and a user interface) to be executed. For example, the electronic device 1230 may present the content through an information display window 1249 based on received another contents and another information corresponding to the user interface based on the third instructions 1219.

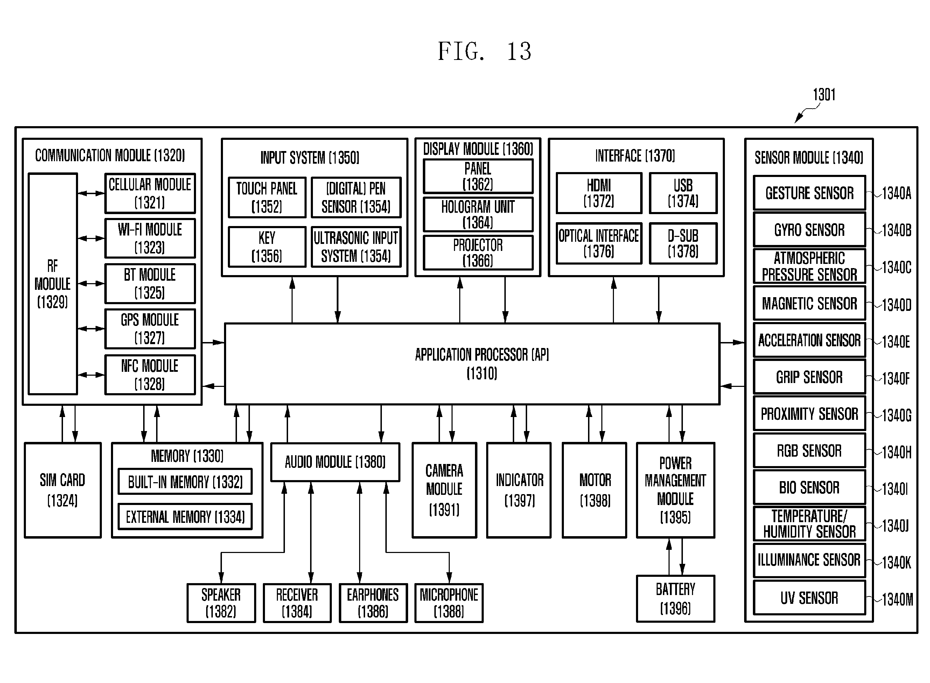

FIG. 13 is a block diagram of an electronic device according to an embodiment of the present disclosure.

Referring to FIG. 13, an electronic device 1301 is illustrated, where the electronic device 1301 may include, for example, all or some of the electronic device 101 as illustrated in FIG. 1. Alternatively, the electronic device 1301 may constitute, for example, all or a part of the electronic device 104 as shown in FIG. 1.

Referring to FIG. 13, the electronic device 1301 may include at least one Application Processor (AP) 1310, a communication module 1320 (e.g., a wireless communication processor), a Subscriber Identifier Module (SIM) card 1324, a memory 1330, a sensor module 1340, an input device/system 1350, a display module 1360, an interface 1370, an audio module 1380, a camera module 1391, a power management module 1395, a battery 1396, an indicator 1397, and a motor 1398.

The AP 1310 may control a plurality of hardware and/or software components connected to the AP 1310 by driving an operating system and/or an application program and process various data including multimedia data and perform calculations. The AP 1310 may be implemented by, for example, a System on Chip (SoC). According to an embodiment, the AP 1310 may further include a Graphic Processing Unit (GPU).

The communication module 1320 (e.g., the communication interface 160) may perform data transmission/reception in communication between the electronic device 1301 (e.g., the electronic device 101) and other electronic devices (e.g., the electronic device 104 and the server 106) connected thereto through a network. According to an embodiment, the communication module 1320 may include a cellular module 1321, a Wi-Fi module 1323, a BT module 1325, a GPS module 1327, a Near Field Communications (NFC) module 1328, and a Radio Frequency (RF) module 1329.

The cellular module 1321 may provide a voice call, a video call, a Short Message Service (SMS), and/or an Internet service through a communication network (e.g., LTE, LTE-Advanced, CDMA, WCDMA, UMTS, WiBro, and/or GSM). Further, the cellular module 1321 may distinguish and authenticate electronic devices within a communication network using, for example, a subscriber identification module (e.g., the SIM card 1324). According to an embodiment, the cellular module 1321 may perform at least some functions which can be provided by the AP 1310. For example, the cellular module 1321 may perform at least some of the multimedia control functions.

According to an embodiment, the cellular module 1321 may include a Communication Processor (CP). Further, the cellular module 1321 may be implemented by, for example, a SoC. Although the components such as the cellular module 1321 (e.g., a communication processor), the memory 1330, and the power management module 1395 are illustrated as components separated from the AP 1310, the AP 1310 may include at least some of the aforementioned components (e.g., the cellular module 1321) in an embodiment.

According to an embodiment, the AP 1310 and/or the cellular module 1321 (e.g., communication processor) may load one or more instructions and/or data received from at least one of a non-volatile memory and other elements connected thereto in a volatile memory, and may process the loaded command or data. Further, the AP 1310 and/or the cellular module 1321 may store data received from and/or generated by at least one of other components in a non-volatile memory.

Each of the Wi-Fi module 1323, the BT module 1325, the GPS module 1327, and the NFC module 1328 may include, for example, a processor for processing data transmitted/received through the corresponding module. In FIG. 13, the cellular module 1321, the Wi-Fi module 1323, the BT module 1325, the GPS module 1327, and the NFC module 1328 are illustrated as separate blocks, but at least some (e.g., two or more) of the cellular module 1321, the Wi-Fi module 1323, the BT module 1325, the GPS module 1327, and the NFC module 1328 may be included in one Integrated Chip (IC) or one IC package. For example, at least some (e.g., the communication processor corresponding to the cellular module 1321 and the Wi-Fi processor corresponding to the Wi-Fi module 1323) of the processors corresponding to the cellular module 1325, the Wi-Fi module 1327, the BT module 1328, the GPS module 1321, and the NFC module 1323 may be implemented by one SoC.

The RF module 1329 may transmit/receive data, for example, an RF signal. Although not illustrated, the RF module 1329 may include, for example, a transceiver, a Power Amplifier Module (PAM), a frequency filter, a Low Noise Amplifier (LNA), or the like. Also, the RF module 1329 may further include a component for transmitting/receiving electronic waves over a free air space in wireless communication, for example, a conductor, a conducting wire or the like. Although the cellular module 1321, the Wi-Fi module 1323, the BT module 1325, the GPS module 1327, and the NFC module 1328 share one RF module 1329, and at least one of the cellular module 1321, the Wi-Fi module 1329, the BT module 1323, the GPS module 1325, and the NFC module 1327 may transmit/receive an RF signal through a separate RF module in one embodiment.

The SIM card 1324 may be a card including a subscriber identification module, and may be inserted into a slot formed in a particular portion of the electronic device. The SIM card 1324 may include unique identification information (e.g., an Integrated Circuit Card Identifier (ICCID)) and/or subscriber information (e.g., International Mobile Subscriber Identity (IMSI)).

The memory 1330 (e.g., the memory 130) may include an internal (built-in) memory 1332 and/or an external memory 1334. The internal memory 1332 may include, for example, at least one of a volatile memory (e.g., a Dynamic RAM (DRAM), a Static RAM (SRAM), a Synchronous Dynamic RAM (SDRAM), and the like), and a non-volatile Memory (e.g., a One Time Programmable ROM (OTPROM), a Programmable ROM (PROM), an Erasable and Programmable ROM (EPROM), an Electrically Erasable and Programmable ROM (EEPROM), a mask ROM, a flash ROM, a NAND flash memory, an NOR flash memory, and the like).

According to an embodiment, the internal memory 1332 may be a Solid State Drive (SSD). The external memory 1334 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 1334 may be functionally connected with the electronic device 1301 through various interfaces. According to an embodiment, the electronic device 1301 may further include a storage device (or storage medium) such as a hard drive.

The sensor module 1340 may measure a physical quantity or detect an operation state of the electronic device 1301, and may convert the measured or detected information to an electronic signal. The sensor module 1340 may include at least one of, for example, a gesture sensor 1340A, a gyro sensor 1340B, an atmospheric pressure sensor 1340C, a magnetic sensor 1340D, an acceleration sensor 1340E, a grip sensor 1340F, a proximity sensor 1340G, a color (Red Blue Green (RGB)) sensor 1340H, a bio-sensor 1340I, a temperature/humidity sensor 1340J, an illumination/illuminance sensor 1340K, and a Ultra Violet (UV) sensor 1340M. Additionally or alternatively, the sensor module 1340 may include, for example, an E-nose sensor (not illustrated), an electromyography (EMG) sensor (not illustrated), an electroencephalogram (EEG) sensor (not illustrated), an electrocardiogram (ECG) sensor (not illustrated), an Infrared (IR) sensor, an iris sensor (not illustrated), a fingerprint sensor, and the like. The sensor module 1340 may further include a control circuit for controlling one or more sensors included in the sensor module 1340.

The input device/system 1350 may include a touch panel 1352, a (digital) pen sensor 1354, a key 1356, and/or an ultrasonic input device/system 1358. The touch panel 1352 may recognize a touch input through at least one of a capacitive type, a resistive type, an infrared type, and an acoustic wave type. The touch panel 1352 may further include a control circuit. The capacitive type touch panel may recognize physical contact or proximity. The touch panel 1352 may further include a tactile layer. Accordingly, the touch panel 1352 may provide a tactile reaction to the user. According to an embodiment, the touch panel 1352 may provide electrostatic vibration or electrical stimulation.

The (digital) pen sensor 1354 may be implemented, for example, using a method identical or similar to a method of receiving a touch input of the user, or using a separate recognition sheet. The key 1356 may include, for example, a physical button, an optical key, and/or a keypad. The ultrasonic input device/system 1358 may identify data by detecting an acoustic wave with a microphone (e.g., microphone 1388) of the electronic device 1301 through an input unit generating an ultrasonic signal, and may perform wireless recognition. According to an embodiment, the electronic device 1301 may receive a user input from an external device (e.g., a computer and/or a server) connected thereto using the communication module 1320.

The display module 1360 (e.g., the display 150) may include a panel 1362, a hologram unit 364, and/or a projector 1366. The panel 1362 may be, for example, a Liquid Crystal Display (LCD) or an Active Matrix Organic Light Emitting Diode (AM-OLED). The panel 1362 may be implemented to be, for example, flexible, transparent, and/or wearable. The panel 1362 may be configured by the touch panel 1352 and one module. The hologram unit 1364 may show a stereoscopic image in the air using interference of light. The projector 1366 may project light onto a screen to display an image. The screen may be located, for example, inside or outside the electronic device 1301. According to an embodiment, the display module 1360 may further include a control circuit for controlling the panel 1362, the hologram unit 1364, or the projector 1366.

The interface 1370 may include, for example, a High-Definition Multimedia Interface (HDMI) 1372, a Universal Serial Bus (USB) 1374, an optical interface 1376, and/or a D-subminiature (D-sub) 1378. The interface 1370 may be included in, for example, the communication interface 160. Additionally or alternatively, the interface 1370 may include, for example, a Mobile High-definition Link (MHL) interface, a Secure Digital (SD)/MultiMedia Card (MMC) interface, and/or an Infrared Data Association (IrDA) standard interface.

The audio module 1380 may bilaterally convert a sound and an electronic signal. At least some components of the audio module 1380 may be included in, for example, the input/output interface 140. The audio module 1380 may process sound information input and/or output through, for example, a speaker 1382, a receiver 1384, earphones 1386, the microphone 1388 and/or the like.

The camera module 1391 is a device for capturing a still image or a video, and according to an embodiment, may include one or more image sensors (e.g., a front sensor and/or a rear sensor), a lens (not illustrated), an Image Signal Processor (ISP) (not illustrated), and/or a flash (not illustrated) (e.g., an LED and/or xenon lamp).

The power management module 1395 may manage power of the electronic device 1301. Although not illustrated, the power management module 1395 may include, for example, a Power Management Integrated Circuit (PMIC), a charger Integrated Circuit (IC), a battery and/or fuel gauge.

The PMIC may be mounted to, for example, an integrated circuit or a SoC semiconductor. Charging methods may be classified into a wired charging method and a wireless charging method. The charger IC may charge a battery and prevent over voltage or over current from being flowed from a charger. According to an embodiment, the charger IC may include a charger IC for at least one of the wired charging method and the wireless charging method. A magnetic resonance scheme, a magnetic induction scheme, or an electromagnetic scheme may be exemplified as the wireless charging method, and an additional circuit for wireless charging, such as a coil loop circuit, a resonance circuit, a rectifier circuit, and the like may be added.

The battery gauge may measure, for example, a remaining quantity of the battery 1396, a voltage, a current, and/or a temperature during the charging. The battery 1396 may store or supply power to the electronic device 1301. The battery 1396 may include, for example, a primary battery, a rechargeable battery and/or a solar charged battery.

The indicator 1397 may display a specific status of the electronic device 1301 or a part (e.g., the AP 1310) of electronic device, for example, a booting status, a message status, a charging status, and the like. The motor 1398 may convert an electrical signal to a mechanical vibration. For example, the motor 1398 may include an actuator for providing the sense interface. Although not illustrated, the electronic device 1301 may include a processing unit (e.g., a GPU) for supporting a mobile TV. The processing unit for supporting the mobile TV may process media data according to a standard of Digital Multimedia Broadcasting (DMB), Digital Video Broadcasting (DVB), media flow or the like.

The above described components of the electronic device according to various embodiments of the present disclosure may be formed of one or more components, and a name of a corresponding component element may be changed based on the type of electronic device. The electronic device according to the present disclosure may include one or more of the aforementioned components or may further include other additional components, or some of the aforementioned components may be omitted. Further, some of the components of the electronic device according to the various embodiments of the present disclosure may be combined to form a single entity, and thus, may equivalently execute functions of the corresponding elements prior to the combination.

The "module" used in various embodiments of the present disclosure may refer to, for example, a "unit" including one of hardware, software, and firmware, or a combination of two or more of the hardware, software, and firmware. The "module" may be interchangeably used with a term, such as unit, logic, logical block, component, or circuit. The "module" may be the smallest unit of an integrated component or a part thereof. The "module" may be the smallest unit that performs one or more functions or a part thereof. The "module" may be mechanically or electronically implemented. For example, the "module" according to various embodiments of the present disclosure may include at least one of an Application-Specific Integrated Circuit (ASIC) chip, a Field-Programmable Gate Arrays (FPGAs), and a programmable-logic device for performing operations which have been known or are to be developed hereafter.

According to various embodiments, at least part of a device (e.g., modules or functions thereof) or a method (e.g., operations) according to the various embodiments of the present disclosure may be embodied by, for example, an instruction stored in a computer readable storage medium provided in a form of a programming module. When the one or more instructions are executed by one or more processors (e.g., the processor 120), the one or more processors may execute a function corresponding to the one or more instructions. The computer-readable storage medium may be, for example, the memory 130. At least a part of the programming module may be implemented (e.g., executed) by, for example, the processor 210. At least a part of the programming module may include, for example, a module, a program, a routine, or a set of instructions and/or a process for performing one or more functions.

The computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction (e.g., programming module), such as a Read Only Memory (ROM), a Random Access Memory (RAM), a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

According to various embodiments, a storage medium for storing one or more instructions is provided. The one or more instructions are configured to allow one or more processors to perform one or more operations when the one or more instructions are executed by the one or more processors. The one or more operations may include an operation of establishing a communication connection with an external electronic device through a wireless communication module and/or processor functionally connected to a wearable electronic device, and an operation of receiving content corresponding to an application to be executed in the external electronic device and information on a user interface for providing the content from the external electronic device, and an operation of providing/displaying at least some of the content by using at least one user interface corresponding to the information.

Embodiments of the present disclosure provided in the present specifications and drawings are merely certain examples to readily describe the technology associated with embodiments of the present disclosure and to help understanding of the embodiments of the present disclosure, but may not limit the scope of the embodiments of the present disclosure. Therefore, in addition to the embodiments disclosed herein, the scope of the various embodiments of the present disclosure should be construed to include all modifications or modified forms drawn based on the technical idea of the various embodiments of the present disclosure.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A wearable electronic device comprising:
a wireless communication module to establish a communication connection with an external electronic device; and
a user interface control module configured to:
receive, via the wireless communication module and from the external electronic device, content corresponding to an application to be executed at the external electronic device and information corresponding to one or more user interfaces to be presented at the wearable electronic device; and
present at least one portion of the content using at least one user interface of the one or more user interfaces corresponding to the information.

2. The wearable electronic device of claim 1, wherein the information comprises one or more instructions to be used to control the at least one user interface.

3. The wearable electronic device of claim 1, wherein the application includes a first application and a second application, and
wherein the user interface control module is configured to:
receive first content corresponding to the first application and second content corresponding to the second application as at least part of the content.

4. The wearable electronic device of claim 1, wherein the user interface control module is configured to:
transmit a signal to the external electronic device such that at least one function of the application can be performed via the external electronic device in response to an input received in relation with the at least one portion.

5. The wearable electronic device of claim 1, wherein the user interface control module is configured to:
receive another information corresponding to the application from the external electronic device; and
display, via a display operatively coupled with the wearable electronic device, a representation corresponding to the application based at least in part on the other information.

6. The wearable electronic device of claim 5, wherein the user interface control module is configured to:
obtain an input in relation with the representation; and
transmit a request for the content to the external electronic device in response to the input.

7. The wearable electronic device of claim 5, wherein the user interface control module is configured to:
hide the representation from the display based on a determination that the communication connection with the external electronic device is disconnected.

8. The wearable electronic device of claim 1, wherein the one or more user interfaces comprise at least one of an information display window, a label, a button, a slider, a thumbnail, a list, a spin, a progress bar, a progress image, a graph, a swipe, a watch, a media control, a time, or weather information.

9. The wearable electronic device of claim 1, wherein the user interface control module is configured to:
determine the at least one user interface from the one or more user interfaces based at least in part on capacity of the wearable electronic device or the content.

10. The wearable electronic device of claim 1, wherein the user interface control module is configure to:
determine a display layout of the at least one user interface based at least in part on capacity of the wearable electronic device or the content.

11. An electronic device comprising:
a wireless communication module to establish a communication connection with an external electronic device; and
an interworking control module configured to:
obtain a request for content corresponding to at least one application capable of being executed at the electronic device; and
transmit, via the wireless communication module, the content and information corresponding to one or more user interfaces to the external electronic device in response to the requeset, the one or more user interfaces to be performed at the external electronic device to present the content.

12. The electronic device of claim 11, wherein the interworking control module is configured to:
obtain the request as a user input via a display operatively coupled with the electronic device, or from the external electronic device via the wireless communication module.

13. The electronic device of claim 11, wherein the interworking control module is configured to:
obtain, from the external electronic device, an input received in relation with at least one portion of the content presented at the external electronic device.

14. The electronic device of claim 13, wherein the interworking control module is configured to:
perform a function of the at least one application in response to the input; and
transmit another content related to the function to the external electronic device.

15. The electronic device of claim 13, wherein the interworking control module is configured to:
perform a function of the at least one application in response to the input; and
display another content related to the function via a display operatively coupled with the electronic device.

16. An electronic device comprising:
a processor;
a wireless communication module to establish a communication connection with another electronic device external to the electronic device; and
memory to store an application and a user interface control module, the user interface control module, when executed by the processor, configured to:
receive, via the wireless communication module and from the other electronic device, content corresponding to another application to be executed at the other electronic device and information corresponding to one or more user interfaces to be presented at the electronic device; and
present, using the application, at least one portion of the content via at least one user interface of the one or more user interfaces.

17. The electronic device of claim 16, wherein the information comprises one or more instructions to be used to control the at least one user interface.

18. The electronic device of claim 16, wherein the other application includes a first application and a second application, and wherein the user interface control module is configured to:
receive first content corresponding to the first application and second content corresponding to the second application as at least part of the content.

19. The electronic device of claim 16, wherein the user interface control module is configured to:
transmit a signal to the other electronic device such that at least one function of the other application can be performed via the other electronic device, in response to an input received in relation with the at least one portion.

20. The electronic device of claim 16, wherein the user interface control module is configured to:
receive another information corresponding to the other application; and
present a representation corresponding to the other application via a display operatively coupled with the electronic device based at least in part on the other information.

21. The electronic device of claim 20, wherein the user interface control module is configured to:
transmit a request for the other application to the other electronic device such that the other application can be executed at the other electronic device, in response to an input received in relation with the representation.

22. The electronic device of claim 16, wherein the user interface control module comprises a middleware or a platform.

23. An electronic device comprising:
a processor;
a communication module to establish a communication connection with another electronic device external to the electronic device; and
memory to store an application and an interworking control module, the interworking control module, when executed by the processor, configured to:
obtain content corresponding to the application and information corresponding to one or more user interfaces to be performed at the other electronic device to present the content; and
transmit the content and the information to the other electronic device via the communication module.

24. The electronic device of claim 23, wherein the interworking control module is configured to:
obtain a request for the content from the other electronic device.

25. The electronic device of claim 23, wherein the interworking control module is configured to:
obtain, via the other electronic device, an input received in relation with the at least one portion of the content presented at the other electronic device.

26. The electronic device of claim 25, wherein the application is configured to:
perform a function of the application in response to the input; and
transmit another content related to the function to the other electronic device via the interworking control module.

27. The electronic device of claim 23, wherein the application comprises one or more applications received from a server or a third electronic device.

28. The electronic device of claim 23, wherein the application comprises one or more instructions using an application programming interface corresponding to the interworking control module.

29. The electronic device of claim 28, wherein at least one of the one or more instructions is to be performed independent of capacity of hardware of the other electronic device.

30. The electronic device of claim 23, wherein the application comprises at least one of a message application, an e-mail application, a calendar application, an alarm application, a health care application, or an environmental information application.
